# EUROPEAN PATENT APPLICATION

(11) **EP 1 642 786 A2**
(43) Date of publication of application: **05.04.2006**
(21) Application number: 05018962.0
(22) Date of filing: 31.08.2005
(51) Int. Cl.: B60R 21/34

(54) **Hood stopper structure for automobile**

(30) Priority: 30.09.2004 JP 2004286435; 30.09.2004 JP 2004286436; 30.09.2004 JP 2004287277; 30.09.2004 JP 2004287278; 30.09.2004 JP 2004287279
(71) Applicant: Mazda Motor Corporation, Aki-gun, Hiroshima 730-8670 (JP)
(72) Inventor: Fujii, Terumasa, c/o Mazda Motors Corp., Aki-gun Hiroshima 730-8670 (JP); Emoto, Kouji, c/o Mazda Motors Corp., Aki-gun Hiroshima 730-8670 (JP); Furumoto, Arihiro, c/o Mazda Motors Corp., Aki-gun Hiroshima 730-8670 (JP); Hirata, Yorimitsu, c/o Mazda Motors Corp., Aki-gun Hiroshima 730-8670 (JP)
(74) Representative: Müller-Boré & Partner Patentanwälte

(57) **Abstract**

Disclosed is an automobile hood stopper structure wherein a stopper (7) serving as a cushioning member during closing of a hood (5) attached to a front portion of an automobile body is disposed between the hood (5) and an automobile body member (1,2), which comprises a support bracket (8) formed with a support portion supporting the stopper (7), and attached to the automobile body member (1,2). The automobile hood stopper structure is designed such that, when the stopper (7) supported by the support bracket (8) is subjected to the action of a load having a given value or more which is greater than a load acting thereon during closing of the hood (5), the support bracket (8) is deformed to thereby facilitate a downward movement of the stopper (7). The automobile hood stopper structure of the present invention can effectively absorb an impact energy during closing of a hood (5), and effectively cushion an impact load acting in the event of a collision, for example, a collision of a pedestrian's head against a top surface of the hood (5), in a simplified structure.

## Description

### TECHNICAL FIELD

The present invention relates to a hood stopper structure for an automobile including a stopper disposed between a hood attached to a front potion of an automobile body and an automobile body member to serve as a cushioning member during closing of the hood.

### BACKGROUND ART

Theretofore, it has been practiced to dispose at a front portion of an automobile body a hood damper which comprises an arm supported pivotally in a standing manner and swingably in the longitudinal or frontward/rearward direction of the automobile body, an elastic member attached at a free end of the arm, a stopper for preventing the arm at a predetermined frontward tilted position from being further tilted frontward, and a friction member for absorbing energy during rearward swing of the arm, so as to absorb an impact energy acting through a bonnet or hood, as disclosed in Japanese Patent Laid-Open Publication No. 59-6158 (Patent Publication 1).

According to the invention disclosed in the Patent Publication 1, in an operation for closing the hood, the hood damper can be elastically deformed to absorb an impact energy acting during closing of the hood. Further, in the event of a collision, for example, a collision of a pedestrian's head against a top surface of the hood, the arm supporting the elastic member can be tilted rearward, and an arm stopper serving as the friction member formed with the arm can be brought into contact with and deformed by a folded-back portion of a bracket, so as to cushion a shock to be applied to the pedestrian's head during the collision.

### SUMMARY OF THE INVENTION

However, the above technique has a problem about structural complexity because it is required to allow the arm pivotally supporting the elastic member serving as a stopper member to be swingably supported by the bracket mounted on an automobile body member, and provide the folded-back portion for limiting the rearward tilting of the arm within a given range, a spring for biasing the arm frontward and others.

It is therefore an object of the present invention to provide an automobile hood stopper structure capable of effectively absorbing an impact energy during closing of a hood, and effectively cushioning an impact load acting in the event of a collision, for example, a collision of a pedestrian's head against a top surface of the hood, in a simplified structure.

In order to achieve the above object, the present invention provides an automobile hood stopper structure wherein a stopper serving as a cushioning member during closing of a hood attached to a front potion of an automobile body is disposed between the hood and an automobile body member, which comprises a support bracket formed with a support portion supporting the stopper, and attached to the automobile body member. The automobile hood stopper structure is designed such that, when the stopper supported by the support bracket is subjected to the action of a load having a given value or more which is greater than a load acting thereon during closing of the hood, the support bracket is deformed to thereby facilitate a downward movement of the stopper (claim 1 in the appended claims).

The automobile hood stopper structure of the present invention is designed such that, when the stopper serving as a cushioning member is subjected to the action of a load having a given value or more which is greater than a load acting during closing of the hood, the support bracket supporting the stopper is deformed to allow the stopper to be moved downward. Thus, according to this simplified structure based on supporting the stopper by the support bracket, an impact energy during closing of the hood can be effectively absorbed. In addition, when the stopper is subjected to the action of a load greater than that during closing of the hood due to occurrence of a collision, for example, a collision of a pedestrian's head against a top surface of the hood, the load can be effectively absorbed to effectively cushion a shock to be applied to the pedestrian's head.

These and other objects, features, and advantages of the present invention will become more apparent upon reading the following detailed description along with the accompanying drawings.

### BRIEF DESCRIPTION OF DRAWINGS

FIG. 1 is a perspective view showing a front portion of an automobile body having an automobile hood stopper structure according to a first embodiment of the present invention.
FIG. 2 is an exploded perspective view showing the automobile hood stopper structure according to the first embodiment.
FIG. 3 is a sectional side view showing the automobile hood stopper structure according to the first embodiment in the state when a load is entered from a hood into a stopper during closing of the hood.
FIG. 4 is a sectional side view showing the automobile hood stopper structure according to the first embodiment in the state when a load is entered from the hood into the stopper in the event of a collision.
FIG. 5 is a perspective view showing the automobile hood stopper structure according to the first embodiment in the state after a support bracket is deformed.
FIG. 6 is a sectional side view showing the automobile hood stopper structure according to the first embodiment in the state after the support bracket is deformed.
FIG. 7 is a perspective view showing a collision where a pedestrian runs on an automobile hood.
FIG. 8 is a graph showing changes of a load entered into the support bracket in the automobile hood stopper structure according to the first embodiment.
FIG 9 is a sectional side view showing an automobile hood stopper structure according to a second embodiment of the present invention.
FIG. 10 is an exploded perspective view showing an automobile hood stopper structure according to a third embodiment of the present invention.
FIG. 11 is a sectional side view showing the automobile hood stopper structure according to the third embodiment in the state after a hood is closed.
FIG. 12 is a sectional side view showing the automobile hood stopper structure according to the third embodiment in the state after a support bracket is deformed.
FIG 13 is a graph showing changes of a load entered into the support bracket in the automobile hood stopper structure according to the third embodiment.
FIG. 14 is an exploded perspective view showing an automobile hood stopper structure according to a fourth embodiment of the present invention.
FIG. 15 is a graph showing changes of a load entered into a support bracket in the automobile hood stopper structure according to the fourth embodiment.
FIG. 16 is an exploded perspective view showing an automobile hood stopper structure according to a fifth embodiment of the present invention.
FIG. 17 is a graph showing changes of a load entered into a support bracket in the automobile hood stopper structure according to the fifth embodiment.
FIG. 18 is a sectional view showing the automobile hood stopper structure according to the fifth embodiment in the state before a load is entered into the support bracket.
FIG 19 is a sectional view showing the automobile hood stopper structure according to the fifth embodiment in the state after the load is entered into the support bracket.
FIG. 20 is an exploded perspective view showing an automobile hood stopper structure according to a sixth embodiment of the present invention.
FIG. 21 is a sectional side view showing the automobile hood stopper structure according to the sixth embodiment in the state after a hood is closed.
FIG. 22 is a perspective view showing the automobile hood stopper structure according to the sixth embodiment in the state after a stopper is disengaged.
FIG. 23 is a perspective view showing the automobile hood stopper structure according to the sixth embodiment in the state after the stopper is disengaged.
FIG 24 is a graph showing changes of a load entered into a support bracket in each of the automobile hood stopper structure according to the sixth embodiment and an automobile hood stopper structure according to a seventh embodiment of the present invention.
FIG. 25 is an exploded perspective view showing the automobile hood stopper structure according to the sixth embodiment.
FIG 26 is a perspective view showing the automobile hood stopper structure according to the sixth embodiment in the state after a stopper is disengaged.

### DETAILED DESCRIPTION OF THE INVENTION

### [FIRST EMBODIMENT]

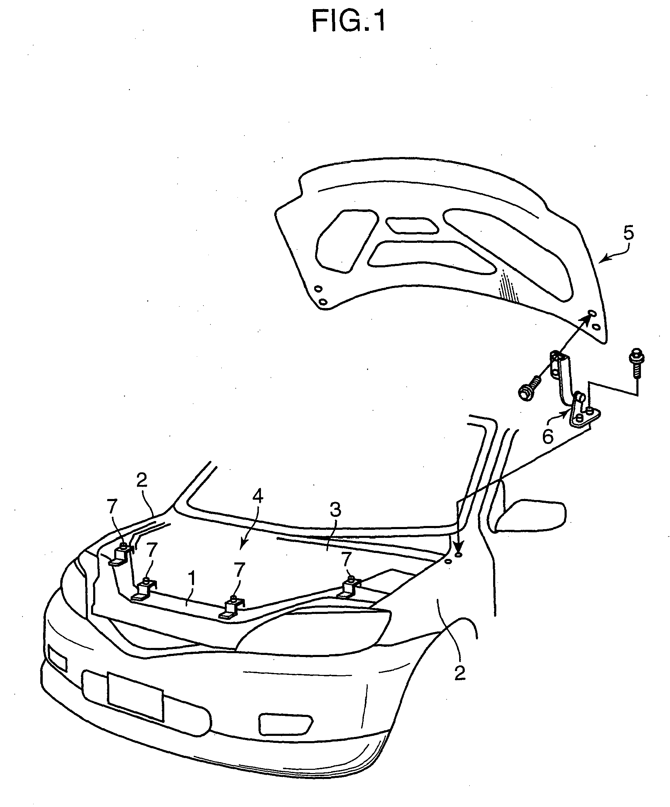

FIG 1 shows a front portion of an automobile body having an automobile hood stopper structure according to a first embodiment of the present invention. The front portion of the automobile body is provided with a hood 5 adapted to open and close an upper opening of an engine compartment 4 surrounded by an upper shroud 1 disposed in a front area thereof, a front fender panel 2 disposed in right and left side areas thereof, and a dash panel 3 disposed in a rear area thereof.

The hood 5 is supported by the front portion of the automobile body, in such a manner as to be swingably manipulated about a hood hinge 6 attached between a rear end region of a bottom surface of the hood 5 and a rear end region of an upper surface of the front fender panel 2, and displaced between one position where it closes the upper opening of the engine compartment 4 and another position where it opens the upper opening of the engine compartment 4. Further, a hood lock (not shown) adapted to keep the hood 5 in its closed state is provided between an front region of the bottom surface of the hood 5 and a top surface of the upper shroud 1, and four stoppers 7 each serving as a cushioning member during closing of the hood 5 are disposed above the top surface of the upper shroud 1 to be in opposed relation to the front region of the bottom surface of the hood 5.

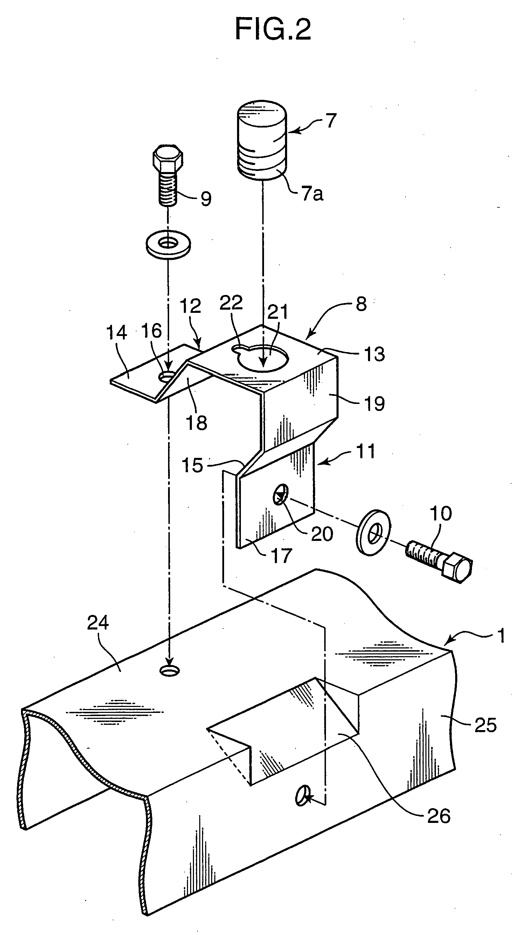

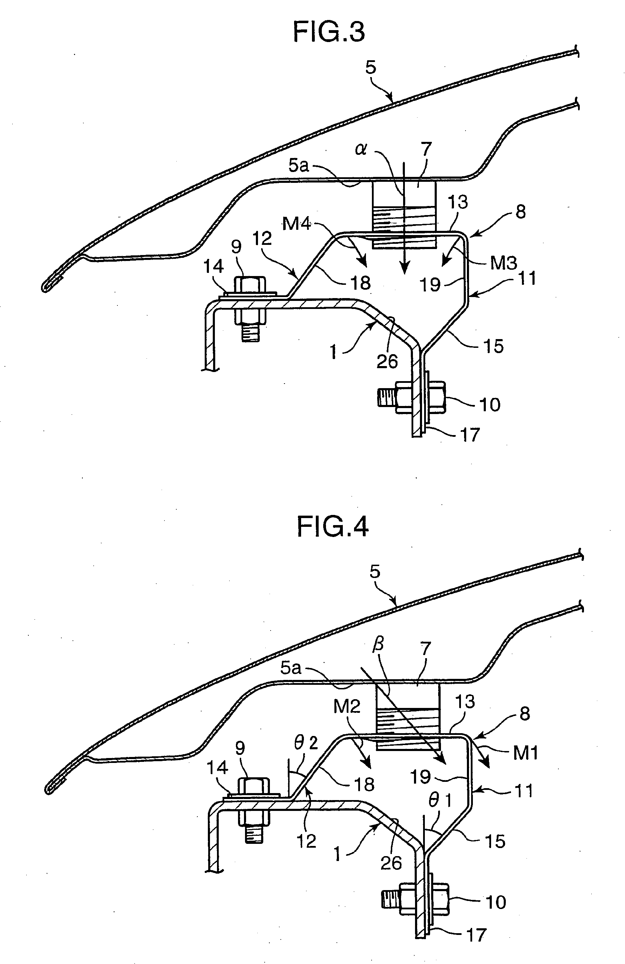

Each of the stoppers 7 is composed of a columnar-shaped member made of synthetic rubber or the like, and supported by a support bracket 8 attached to the upper shroud 1, as shown in FIGS. 2 and 3. The support bracket 8 has first and second legs 11, 12 attached to the upper shroud 1, respectively, by first and second mounting bolts 10, 9, and a top portion 15 extending horizontally between respective upper ends of the first and second legs 11, 12.

The first leg 11 of the support bracket 8 has a vertically-extending flange portion 17, an inclined portion 15 extending from an upper end of the flange portion 17 in a rearward and upward direction inclined by a given oblique angle, and a vertical portion 19 extending vertically upward from an upper end of the inclined portion 15. The flange portion 17 is formed with a through-hole 20 penetrated by the mounting bolt 10. The second leg 12 of the support bracket 8 has a horizontally-extending flange portion 14, and an inclined portion 18 extending from an rear end of the flange portion 14 in a rearward and upward direction inclined by a given oblique angle. The flange portion 14 is formed with a through-hole 16 penetrated by the mounting bolt 9. The respective oblique angles of the inclined portions 15, 18 are set to allow each of the inclined portions 15, 18 to be located approximately orthogonal to an after-mentioned action direction β of a load acting in the event of a collision (see FIG. 4).

The top portion 13 has a central region formed with a support portion for the stopper 7, which consists of a support hole 21 in which the stopper is fittingly engaged. This support hole 21 has an inner peripheral surface formed with a spiral groove starting from a U-shaped notch 22 formed in a front edge region of the support hole 21. The stopper 7 has a lower portion formed as an externally-threaded portion 7a. The externally-threaded portion 7a is threadingly engaged with the support hole to allow the stopper 7 to be fittingly engaged in the support hole 21.

The first leg 11 of the support bracket 8 is fixedly attached to a mounting portion consisting of a vertically-extending rear wall 25 of the upper shroud 1 located at a rear end thereof, through the mounting bolt 10, and the second leg 12 of the support bracket 8 is fixedly attached to a mounting portion consisting of a front region of a horizontal wall 24 of the upper shroud 1 located at an upper end thereof, through the mounting bolt 9. In this state, a lower end of the inclined portion 15 of the first leg 11 is located rearward relative to the axis of the stopper 7 supported in the central region of the top portion 13, and a lower end of the inclined portion 18 of the second leg 12 is located frontward relative to the axis of the stopper 7. The top surface of the upper shroud 1 has a rear end region partially formed as a concave portion 26 at a position corresponding to the mounting area of the support bracket 8. The concave portion 26 has a width dimension greater than that of the support bracket 8, and a rearward and downward inclined surface to serve as an escaping space for avoiding the stopper 7 supported by the supported bracket 8 from coming into contact with the upper shroud 1 when the stopper 7 is moved rearward downward in response to a load during a collision as described later.

The stopper 7 supported by the support bracket 8 is disposed below the front end region of the hood 5 in such a manner as to allow a bottom surface of a hood inner panel 5a provided as a bottom member of the hood 5 to come into contact with a top surface of the stopper 7 during closing of the hood 5. Thus, when an approximately vertical load acts along the axis of the stopper 7 during closing of the hood 5, as indicated by the arrow α in FIG. 3, the stopper 7 is elastically deformed in response to this load to absorb an impact energy during closing of the hood 5. Further, vibration of the hood 5 during moving of the automobile will be restricted by the stopper 7.

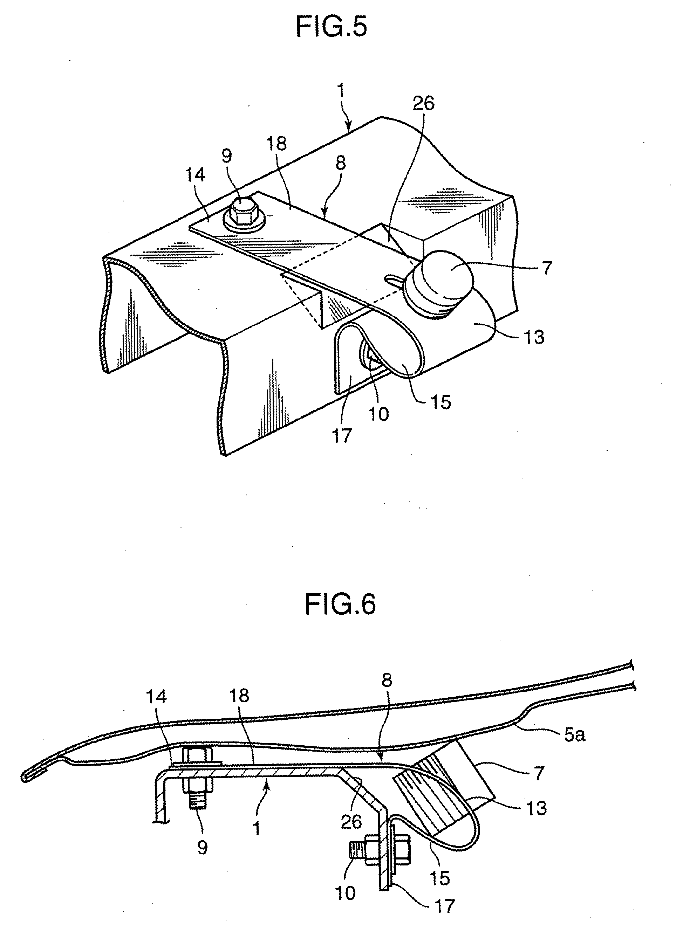

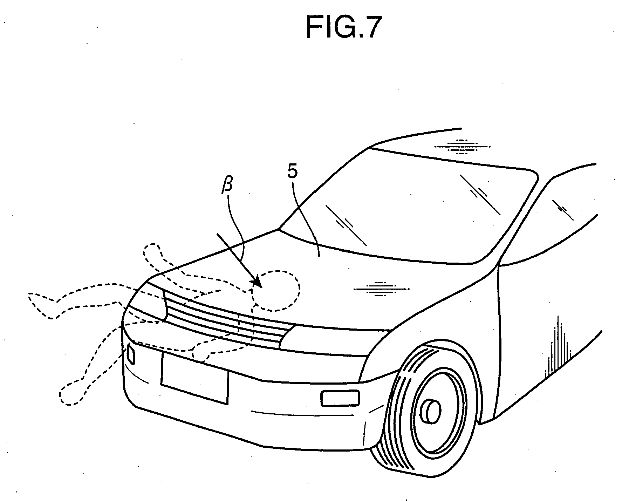

When a load is entered into the stopper 7 obliquely rearward from above as indicated by the arrow β in FIG. 4 due to occurrence of a collision, for example, a situation where a pedestrian collides with the front of a moving automobile and the head of the pedestrian falling onto the hood 5 hits the hood 5 as shown in FIG. 7, the respective rearward and upward inclined portions 15, 18 of the first and second legs 11, 12 of the support bracket 8 are tilted rearward (in a rearward direction of the automobile body) to allow the stopper 7 supported by the support bracket 8 to be moved toward the rear and lower side of the upper shroud 1 and consequently allow the hood 5 to be displaced downward, as shown in FIGS. 5 and 6.

More specifically, in the event of a collision, for example, a collision of a pedestrian's head against a top surface of the hood, a load acts obliquely rearward from above or in the rearward and downward inclined direction β, so that a bending moment M1 is entered into the inclined portion 15 of the first leg 11 disposed on the rearward side of the automobile body, in a direction allowing an oblique angle θ1 of the first leg 11 to be increased around the lower end of the inclined portion 15, because the lower end of the inclined portion 15 is located frontward relative to an action line of the above load. This facilitates a rearward tilting of the first leg 11 to allow the support bracket 8 to be plastically deformed. Thus, as shown in FIGS. 5 and 6, the top portion 13 and the first leg 11 will be moved toward the rear and lower side of the upper shroud 1.

In the same way, a bending moment M2 is entered into the inclined portion 18 of the second leg 12 disposed on the frontward side of the automobile body, in a direction allowing an oblique angle θ2 of the second leg 12 to be increased around the lower end of the inclined portion 18. This facilitates a rearward tilting of the second leg 12 to allow the support bracket 8 to be plastically deformed. Thus, as shown in FIGS. 5 and 6, the second leg 12 will be tilted down on the top surface of the upper shroud 1.

When an approximately vertical load acts along the axis of the stopper 7 during closing of the hood 5, as indicated by the arrow α in FIG. 3, a moment M4 is also entered into the inclined portion 10 of the second leg 12 located frontward relative to an action line of this load, in a direction allowing an oblique angle of the second leg 12 to be increased around the lower end of the inclined portion 18. However, the moment M4 will not be so largely increased, because the load entered in an approximately vertical direction α acts to the inclined portion 18 at a given acute angle. That is, the automobile hood stopper structure according to the first embodiment is designed such that the second leg 12 of the support bracket 8 is never tilted down on the top surface of the upper shroud 1 unless the load acting along the axis of the stopper 7 during closing of the hood 5 is increased up to a fairly large value.

Further, in response to the load entered through the stopper 7 during closing of the hood 5, a moment M 3 acts on the inclined portion 15 of the first leg 11, in a direction allowing the inclined portion 15 to be raised up, because the lower end of the inclined portion 15 is located rearward relative to the axis of the stopper 7. This moment M3 and the moment M4 acting the inclined portion 18 of the second leg 12 will be counteracted to one another to effectively prevent a plastic deformation of the support bracket 8. In this manner, the first and second legs 11, 12 of the support bracket 8 can exhibit a grater supporting rigidity against a load entered into the stopper 7 in an approximately vertical direction α than against a load entered into the stopper 7 obliquely rearward from above or in a rearward and downward inclined direction β.

As above; in the automobile hood stopper structure according to the first embodiment, the stopper 7 serving as a cushioning member during closing of the hood 5 attached to the front potion of the automobile body is disposed between the hood 5 and the upper shroud 1 (automobile body member), and a direction of a load to be entered into the stopper 7 during closing of the hood 5 is set to be an approximately vertical direction α. The support bracket 8 is formed with the support hole 21 serving as the support portion supporting the stopper 7, and the first and second legs attached to the upper shroud 1 (automobile body member). Further, the first and second legs 11, 12 are designed to have a greater supporting rigidity against a load entered into the stopper 7 supported by the support bracket 7, in the approximately vertical direction α, than against a load entered into the stopper 7 obliquely rearward from above or in the rearward and downward inclined direction β. Thus, in the operation for closing the hood 5, the stopper 7 supported by the support bracket 8 can be elastically deformed to absorb an impact energy acting during closing of the hood 5 while preventing the first and second legs 11, 12 of the support bracket 8 from being plastically deformed.

In addition, when a load having a given value or more acts on the support bracket 8 obliquely rearward from above or in the rearward and downward inclined direction β due to occurrence of a collision, for example, a collision of a pedestrian's head against the top surface of the hood 5, the first and second legs 11, 12 of the support bracket 8 can be plastically deformed to allow the support portion supporting the stopper 7 to be moved rearward downward. Thus, the hood 5 can be sufficiently deformed while preventing the stopper 7 from being pinched between the hood 5 and the upper shroud 1 (automobile body member), so that an impact energy can be sufficiently absorbed to effectively cushion a shock to be applied to the pedestrian's head etc.

Further, in the first embodiment, the concave portion 26 having the rearward and downward inclined surface is formed in the rear region of the top surface of the upper shroud 1 mounting the support bracket 8 to provide the escaping space for preventing the stopper 7 supported by the support bracket 8 from coming into contact with the upper shroud 1 when the support bracket 8 is deformed in response to a load entered into the stopper 7 obliquely rearward from above or in the rearward and downward inclined direction β. Thus, when a load having the given value or more acts on the support bracket 8 obliquely rearward from above or in the rearward and downward inclined direction β due to occurrence of a collision, for example, a collision of a pedestrian's head against the top surface of the hood 5, the concave portion 26 can reliably prevent the stopper 7 from being pinched between the upper shroud 1 or the automobile body member and the hood inner panel 5a located at the bottom of the hood 5.

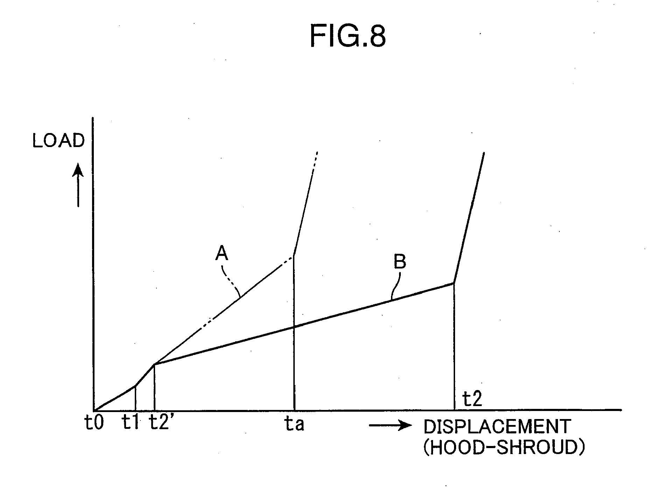

For example, as indicated by the two-dot chain line in FIG. 8, if the stopper 7 is pinched between the hood inner panel 5a located at the bottom of the hood 5 and the upper shroud 1 or the automobile body member, an impact energy entered into the stopper 7 and the support bracket 8 will be increased at an approximately constant rate between Time to when a collision of a pedestrian's head against the top surface of the hood 5 occurs and Time tₐ when the pinching of the stopper 7 occurs, and then the impact energy will be sharply increased due to the stopper 7 acting on the hood 5 to hinder the deformation thereof. Thus, it is inevitable that a shock to be applied to the pedestrian's head etc., will be excessively increased.

In contrast, according to the first embodiment, as indicated by the solid line in FIG. 8, the stopper 7 can be elastically deformed to absorb an impact load, before Time t₁ when a load entered into the stopper 7 reaches the given value. Then, the stopper 7 can be sufficiently moved toward the rear and lower side of the upper shroud 1 between Time t_{2'} when a plastic deformation of the support bracket 8 is initiated and Time t₂ when the second leg 12 of the support bracket 8 is tilted down on the top surface of the upper shroud 1. Thus, during this process, the hood 5 can be gradually deformed to sufficiently bring out a cushioning function of the hood 5 so as to effectively cushion a shock to be applied to the pedestrian's head etc.

In the first embodiment, the support bracket 8 has the vertical portion 19 having a given length on the upper side of the inclined portion 15 of the first leg 19. Thus, as compared to a support bracket having no vertical portion 19 (or a support bracket where the inclined portion 15 further extends rearward upward, and the top portion 13 further extends rearward, in FIGS. 3 and 4, so that the inclined portion 15 and the top portion 13 are directly connected together without interposing the vertical portion 19 therebetween), the first leg 11 has an enhanced flexural or bending rigidity. That is, the vertical portion 19 serves as a high rigidity portion for effectively preventing the first leg 11 from being easily deformed and tilted rearward downward in response to a load entered into the stopper obliquely rearward from above or in the rearward and downward inclined direction β. Thus, when the support bracket 8 is deformed due to occurrence of a collision, for example, a collision of a pedestrian's head against the top surface of the hood 5, the vertical portion 19 makes it possible to avoid an undesirable situation where the first leg 11 of the support bracket 8 is deformed and tilted in advance of deformation and tilting of the second leg 12 so that the stopper 7 is moved in an approximately vertically downward direction to come into contact with the first leg 11 of the support bracket 8, and to effectively avoid an undesirable situation where the stopper 7 is pinched between the hood inner panel 5a and the upper shroud 1. In this way, the pinching of the stopper 7 can be reliably prevented to allow the stopper 7 to be smoothly moved toward the rear and lower side of the upper shroud 1, as shown in FIGS. 5 and 6.

In the first embodiment, the rearward and upward inclined portions 15, 18 serving as a tilting facilitation portion are formed, respectively, in the first leg 11 disposed on the rearward side of the support bracket 8 and the second leg 12 disposed on the frontward side of the support bracket 8. Further, the lower edge of the inclined portion 15 of the first leg 11 is arranged to be located rearward relative to the action line of a load to be entered in the approximately vertical direction α through the stopper 7 during closing of the hood 5, and the lower edge of the inclined portion 18 of the first leg 12 is arranged to be located frontward relative to the action line of the load to be entered in the approximately vertical direction α through the stopper 7 during closing of the hood 5. Thus, as shown in FIG 3, in response to the load entered into the stopper 7 supported by the support bracket, in the approximately vertical direction α during closing of the hood 5, the moment M3 allowing the inclined portion 15 of the first leg 11 to be raised up and the moment M4 allowing the inclined portion 18 of the second leg 12 to be tilted down act, respectively, on the inclined portions 15, 18, in such a manner as to be counteracted to each other. This provides an advantage of being able to effectively prevent a plastic deformation of the support bracket 8.

Further, in the first embodiment, the lower end of the tilting facilitation portion consisting of the inclined portion 15 of the first leg 11 and the inclined portion 18 of the second leg 12 is arranged to be located frontward relative to the action line of the load to be entered through the stopper 7 obliquely rearward from above or in the rearward and downward inclined direction β due to occurrence of a collision, for example, a collision of a pedestrian's head against the top surface of the hood 5. Thus, when the load having the given value or more acts on the support bracket 8 in the direction β, the moment M1 and the moment M2 act, respectively, on the inclined portion 15 of the first leg 11 and the inclined portion 18 of the second leg 12, in a direction allowing each of the inclined portions 15, 18 to be tilted down, as shown in FIG. 4. Thus, in response to the load acting in the event of the collision, the first and second legs 11, 12 of the support bracket 8 can effectively have a plastic deformation to allow the stopper 7 to be moved rearward downward and consequently allow the hood 5 to be displaced downward. This provides an advantage of being able to absorb an impact energy so as to effectively cushion a shock to be applied to the pedestrian's head etc.

In place of the structure in the first embodiment where the tilting facilitation portion consisting of the inclined portions 15, 18 of the first and second legs 11, 12 is provided in the support bracket 8 to facilitate allowing the first and second legs 11, 12 of the support bracket 8 to be tilted in the rearward direction of the automobile body when a load is entered into the stopper 7 obliquely rearward from above or in the rearward and downward inclined direction β, each of the first and second legs 11, 12 of the support bracket 8 may be formed with a weak portion adapted to be easily deformed in response to the load entered into the stopper 7 obliquely rearward from above or in the rearward and downward inclined direction β, or may be formed with a reinforced portion adapted to carry out a function of bearing only a load acting on the stopper 7 in the approximately vertical direction α, so as to allow the first and second legs 11, 12 of the support bracket 8 to be easily tilted in the rearward direction of the automobile body in response to the load acting in the direction β. However, these alternatives cause a problem about structural complexity of the support bracket 8. Thus, it is desirable to form the inclined portions 15, 18 in the first and second legs 11, 12 so as to allow the first and second legs 11, 12 of the support bracket 8 to be easily tilted in the rearward direction of the automobile body, as in the first embodiment.

Further, in place of the structure in the first embodiment where the escaping space consisting of the concave portion 26 having the rearward and downward inclined surface is formed in the rear region of the top surface of the upper shroud 1 to allow the stopper 7 supported by the support bracket 8 to be largely moved toward the rear and lower side of the upper shroud 1 without contact with the upper shroud 1, each of the first and second legs 11, 12 may be designed to have a larger vertical dimension so as to allow the stopper 7 supported by the support bracket 8 to be largely moved toward the rear and lower side of the upper shroud 1 in response to the load entered into the stopper 7 obliquely rearward from above or in the rearward and downward inclined direction β. However, this alternative causes a problem about increase in size of the support bracket 8. Thus, it is desirable to form the escaping space consisting of the concave portion 26 in the rear region of the top surface of the upper shroud 1 to allow the stopper 7 supported by the support bracket 8 to be largely moved toward the rear and lower side of the upper shroud 1 while reducing each length of the first and second legs 11, 12 of the support bracket 8 to facilitate downsizing of the support bracket 8.

### [SECOND EMBODIMENT]

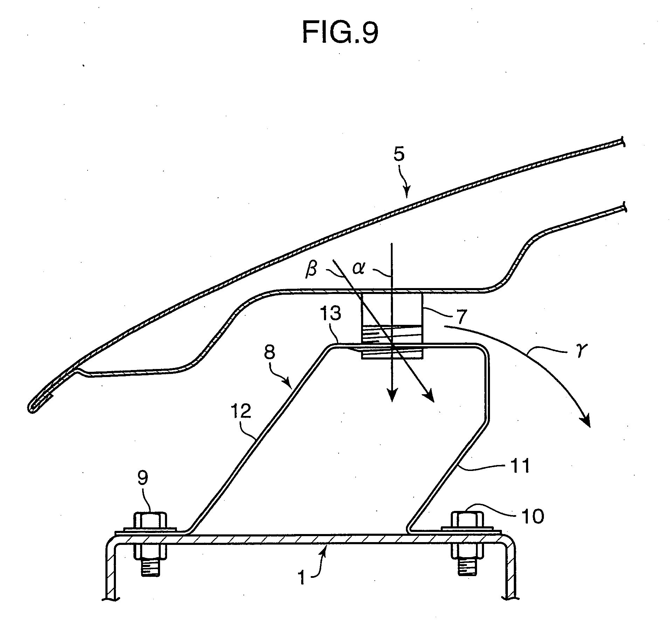

FIG. 9 shows an automobile hood stopper structure according to a second embodiment of the present invention, wherein the first leg 11 of the support bracket has an lower end portion fixedly attached to the rear region of the upper surface of the upper shroud 1, in place of the flange portion 17 in the first embodiment. In the operation for closing the hood 5, the stopper 7 supported by the support bracket 8 in the second embodiment can be elastically deformed to absorb an impact energy acting during closing of the hood 5 while preventing the first and second legs 11, 12 of the support bracket 8 from being plastically deformed. In addition, when the load having the given value or more acts on the support bracket 8 obliquely rearward from above or in the rearward and downward inclined direction β due to occurrence of a collision, for example, a collision of a pedestrian's head against the top surface of the hood 5, the first and second legs 11, 12 of the support bracket 8 can be plastically deformed to allow the support portion supporting the stopper 7 to be moved rearward downward as indicated by the arrow γ, and consequently allow the hood 5 to be displaced downward. Thus, the automobile hood stopper structure according to the second embodiment also has an advantage of being able to absorb an impact energy so as to effectively cushion a shock to be applied to the pedestrian's head etc.

### [THIRD EMBODIMENT]

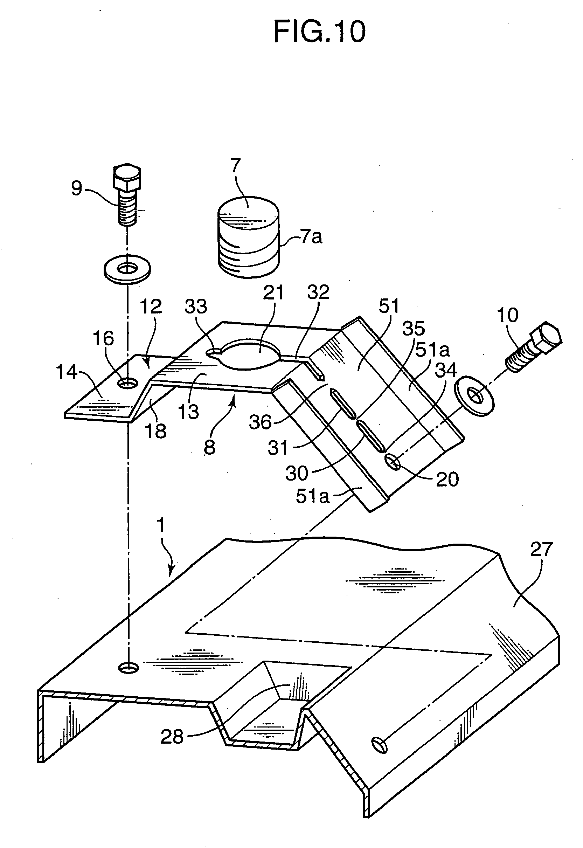

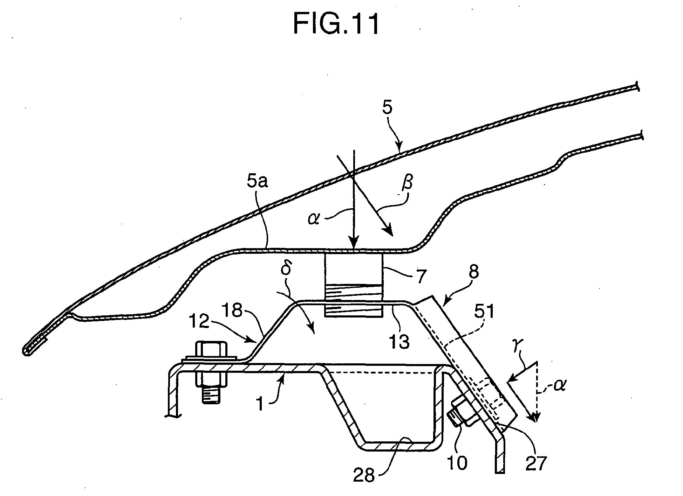

FIG. 10 shows an automobile hood stopper structure according to a third embodiment of the present invention. Except for the following points, the automobile hood stopper structure according to the third embodiment has substantially the same structure as that in the first embodiment. Thus, in FIG. 10, substantially the same element or component as that in the first embodiment is defined by the same reference numeral or code, and its description will be omitted (after-mentioned embodiments will also be described in the same manner). In the third embodiment, a support bracket 8 has a first leg 51 inclined rearward downward along an action direction β (see FIG 11) of a load acting in the event of a collision, for example, a collision of a pedestrian's head against a top surface of a hood 5, and an upper shroud 1 has a rear wall portion 27 with an inclined surface inclined by an angle corresponding to an oblique angle of the first leg 51.

An elongated hole-shaped first slit 32 is formed in an upper end region of the first leg 51 and a rear end region of a top portion 13 of the support bracket 8 in such a manner as to be in communication with a rear edge region of a support hole 21 formed in the top portion 13 to support a stopper 7 in a fitting manner. Further, a second slit 33 consisting of a U-shaped notch is formed in the top portion 13 in such a manner as to be in communication with a front edge region of the support hole 21. The first leg 51 of the support bracket 8 is also formed with an insertion hole 20 penetrated by a rod-shaped member composed of a threaded shaft of a mounting bolt 10 (insertion portion penetrated by a rod-shaped member), and a plurality (two in this embodiment) of elongated hole-shaped third slits 30, 31 disposed in a series arrangement and located on the upper side of the insertion hole 20. Each of the third slits 30, 31 and the first slit 32 is designed to have a width dimension less than an outer diameter of the threaded shaft of the mounting bolt 10. The first leg 51 of the support bracket 8 has laterally opposite side edges each formed with a reinforcing flange 51a.

The support bracket 8 includes first move-in prohibition means consisting of a first closed portion 34 which is formed at a position between the insertion hole 20 penetrated by the mounting bolt 10 and the third slits 30 located immediately above the insertion hole 20, and adapted to prohibit the threaded shaft of the mounting bolt 10 from being moved into the third slit 30, and second move-in prohibition means consisting of a second closed portion 35 which is formed at a position between the third slit 30 and the other third slit 31 located immediately above the third slit 30, and adapted to prohibit the threaded shaft of the mounting bolt 10 from being moved into the third slit 31. The support bracket 8 further includes third move-in prohibition means consisting of a third closed portion 36 which is formed at a position between the third slit 31 and the first slit 32. The third closed portion 36 has a closed distance greater than that of each of the first and second closed portions 34, 35.

The upper shroud 1 has an escaping space consisting of a concave portion 28 which is formed in a rear region of a top surface thereof, and adapted to allow the upper shroud 1 to avoid a contact with the stopper 7 fittingly engaged in the support hole 21 when the stopper 7 is displaced obliquely rearward downward and to receive the stopper 7 when the stopper 7 is disengaged from the support hole 21.

A fastening force of the first leg 51 according to the mounting bolt 10, and respective breaking strengths of the first to third closed portions are arranged such that the first and second closed portions 34, 35 are stepwise broken by the threaded shaft of the mounting bolt 10 when a load having a given first value or more acts in a direction along the rearward and downward inclined plane (along a direction of β as shown in Fig. 11) defined between the first leg 51 of the support bracket 8 and the rear wall portion 27 of the upper shroud 1, so as to allow the threaded shaft to be stepwise moved into the third slits 30, 31, and then the third closed portion 36 is broken by the threaded shaft of the mounting bolt 10 in response to an action of a load having a given second value or more which is greater than the first value, so as to allow the threaded shaft to be moved into the first slit 32.

More specifically, when a load having a component along β direction with a first value K1 (e.g. 1.7 N) or more, which is greater than a load of its β direction component to be entered in a normal operation for closing a hood, acts on the stopper 7 supported by the support bracket 8, for example, due to occurrence of a situation where a pedestrian who comes into contact with the front of a stopped or slow-moving automobile falls down and runs on the hood, the first and second closed portions 34, 35 are stepwise broken by the threaded shaft of the mounting bolt 10 to allow the threaded shaft to be stepwise moved into the third slits 30, 31, so that the first leg 51 of the support bracket 8 is moved downward along the rear wall portion 27 of the upper shroud 1 to absorb the load. That is, the combination of the mounting bolt 10, the first and second closed portions 34, 35 and the third slits 30, 31 serves as first load-absorbing means for absorbing a load entered into the support bracket 8 at a value corresponding to the first value K1, while allowing a downward movement of the stopper 7 supported by the support bracket 8. Note that K1 and K2 are measured along β direction.

When a load having a second value K2 (e.g. 2.5 N) or more, which is greater than the first value K1, is entered into the stopper 7 supported by the support bracket due to occurrence of a collision, for example, a situation where a pedestrian collides with the front of a moving automobile and the head of the pedestrian falling onto the hood 5 hits the hood 5 as shown in FIG. 7, the third closed portion 36 having a closed distance greater than that of each of the first and second closed portions 34, 35 is broken by the threaded shaft of the mounting bolt 10 to allow the threaded shaft to be moved into the first slit 32, so that the first leg 51 of the support bracket 8 is moved downward along the rear wall portion 27 of the upper shroud 1 to absorb the load. That is, the combination of the mounting bolt 10, the third closed portion 36 and the first slit 32 serves as second load-absorbing means for absorbing a load entered into the support bracket 8 at a value corresponding to the second value K2, while allowing a downward movement of the stopper 7 supported by the support bracket 8.

As mentioned above, the width dimension of the first slit 32 for receiving the mounting bolt 10, which is allowed to be moved thereinto when a load entered into the stopper 7 is the second value K2 or more, is set to be less than the outer diameter of the threaded shaft of the mounting bolt 10. Thus, when the threaded shaft of the mounting bolt 10 is moved into the first slit 32 as described above, the width dimension of the first slit 32 is increased by the mounting bolt 10, and the support hole 21 fittingly engaged with the stopper 7 is expandingly deformed in conjunction with the increase in width of the first slit 32. In addition, the second slit (U-shaped notch) 33 is formed on the opposite side of the first slit 32 relative to the support hole 21 (in the front edge region of the support hole 21) in such a manner as to be in communication with the support hole 21. Thus, the second slit 33 can further facilitate inducing the expanding deformation of the support hole 21 therefrom. That is, the combination of the mounting bolt 10 and the first and second slits 32, 33 serves as disengagement facilitation means for expandingly deforming the support hole when a load having the second value K2 or more acts on the stopper 7, to facilitate allowing the stopper 7 fittingly engaged in the support hole 21 to be disengaged therefrom.

As above, in the automobile hood stopper structure according to the third embodiment, the stopper 7 serving as a cushioning member during closing of the hood 5 attached to the front potion of the automobile body is disposed between the hood 5 and the upper shroud 1 (automobile body member), and a direction of a load to be entered into the stopper 7 during closing of the hood 5 is set to be an approximately vertical direction α. The support bracket 8 is formed with the support hole 21 (support portion) supporting the stopper 7, and the first leg 51 located rearward relative to the support hole 21 and attached to the rear wall portion 27 of the upper shroud 1 (mounting portion of an automobile body member). The first leg 51 of the support bracket 8 and the rear wall portion 27 of the upper shroud 1 (mounting portion of an automobile body member) are disposed along a rearward and downward inclined plane. Further, the automobile hood stopper structure is designed such that, when a load corresponding to the given value or more acts along the inclined plane, the first leg 51 of the support bracket 51 is moved downward along the rear wall portion 27 of the upper shroud 1 (mounting portion of an automobile body member). Thus, in the operation for closing the hood 5, the stopper 7 is allowed to effectively function as a cushioning member. Further, in the event of a collision, for example, a situation where a pedestrian collides with the front of a moving automobile and the head of the pedestrian falling onto the hood 5 hits the hood 5 as shown in FIG. 7, the hood 5 is allowed to function as a cushioning member so as to effectively cushion a shock to be applied to the pedestrian's head.

More specifically, in the operation for closing the hood 7, the hood 5 is swung and displaced about the hood hinge 6 located at a rear end thereof to enter a load into the stopper and the support bracket 8 in an approximately vertical direction as indicated by the arrow α in FIG. 11, so that a component force of the load acts on the first leg 51 of the support bracket 8 in a direction γ allowing the first leg 51 to be pressed onto the rear wall 27 of the upper shroud 1. Thus, during closing of the hood 5, the load acting in the approximately vertical direction α can be stably borne by both a frictional resistance corresponding to the component force and a resistance against displacement corresponding to a fastening force of the mounting bolt 10, so as to effectively prevent a plastic deformation of the support bracket 8 and a displacement of the attached fist leg 51.

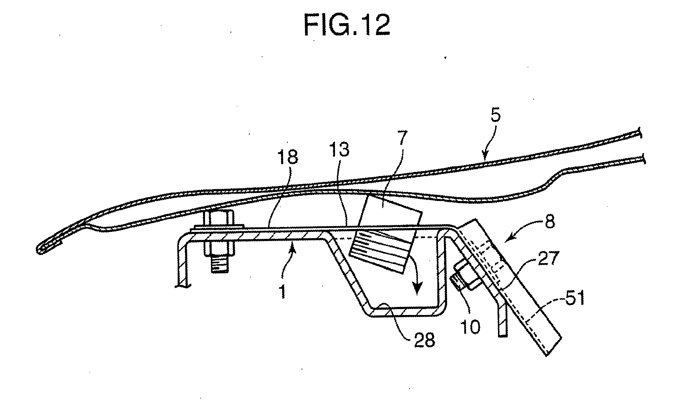

In the event of a collision, for example, a collision of a pedestrian's head against the top surface of the hood 5, a load is entered along the rearward and downward inclined plane defined between the first leg 51 of the support bracket 8 and the rear wall portion 27 of the upper shroud 1. Thus, a large component force of the load never acts in a direction γ allowing the first leg 51 of the support bracket 8 to be pressed onto the rear wall 27 of the upper shroud 1. In addition, a large bending moment will acts on the support bracket 8 in a direction δ allowing the tilting of a second leg 12 to be increased about a lower end of an inclined portion 18. Thus, as shown in FIG. 12, in the event of the above collision, a top portion 13 and the inclined portion 18 can be tilted down on a top surface of the upper shroud 1, and the first leg 51 of the support bracket 8 can be moved downward along the rear wall portion 27 of the upper shroud 1, in a relatively early stage. This makes it possible to allow the hood 5 to be largely displaced downward so as to effectively cushion a shock to be applied to the pedestrian's head etc. In this process, if the first leg 51 of the support bracket 8 is bent, the first leg 51 will have difficulty in being slidingly displaced along the rear wall 27 of the upper shroud 1. In this embodiment, the reinforcing flanges 51a formed in the laterally opposite side edges of the first leg 51 can suppress such a bending deformation of the first leg 51 to reliably prevent the occurrence of the undesirable situation where a sliding movement of the first leg 51 cannot be smoothly performed.

In the third embodiment, the combination of the mounting bolt 10, the first and second closed portions 34, 35 and the third slits 30, 31 serves as the first load-absorbing means for absorbing a load entered into the support bracket 8 at a value corresponding to the first value K1 or more which is greater than a load to be entered therein during closing of the hood 5, while allowing a downward movement of the stopper 7, and the combination of the mounting bolt 10, the third closed portion 36 and the first slit 32 serves as the second load-absorbing means for absorbing a load entered into the support bracket 8 at a value corresponding to the second value K2 or more which is greater than the first value K1, while allowing a downward movement of the stopper 7. Thus, the mounting bolt 10 can be stepwise moved into the slits 30 to 32 depending on the level of a load applied to the support bracket 9 to adequately absorb the load while guiding the first leg 51 of the support bracket 8 and stably moving the first leg 51 downward.

More specifically, in the third embodiment, the first move-in prohibition means consisting of the first closed portion 34 is provided between the insertion hole 20 penetrated by the mounting bolt 10 and the third slit 30 located immediately above the insertion hole 20, to prohibit the rod-shaped member consisting of the threaded shaft of the mounting bolt 10 from being moved into the third slit 30 when a load entered into the support bracket 8 is less than that corresponding to the first value K1. Thus, a load entered into the support bracket during closing of the hood 5 can be borne by the first move-in prohibition means (first closed portion 34) to prevent the rod-shaped member from being moved into the third slit 30, so as to allow the stopper 7 to effectively absorb an impact energy during closing of the hood without a plastic deformation of the support bracket 8.

When a load corresponding to the first value or more which is greater than a load to be entered during closing of the hood 5 is entered into the support bracket 8 due to occurrence of a situation where a pedestrian who comes into contact with the front of a stopped or slow-moving automobile falls down and runs on the hood, move-in prohibited states according to the first move-in prohibition means (first closed portion 34) and the second move-in prohibition means (second closed portion 35) are stepwise released (or the first and second closed portions 34, 35 are stepwise broken) to allow the rod-shaped member consisting of the threaded shaft of the mounting bolt 10 to be moved into the third slits 30, 31. This makes it possible to allow the first leg 51 of the support bracket 8 to be guided by the rod-shaped member and moved downward along the rear wall portion 27 of the upper shroud 1 (mounting portion of an automobile body member), and allow the hood 5 to effectively function as a cushioning member, so as to adequately absorb the load entered into the support bracket 8.

Further, in the third embodiment, the respective width dimensions of the third slits 30, 31 are set to be less than the outer diameter of the threaded shaft of the mounting bolt 10. Thus, when the rod-shaped member consisting of the threaded shaft of the mounting bolt 10 is moved into the third slits 30, 31, the third slits 30, 31 will be increased in width while allowing the rod-shaped member to be further moved thereinto. This makes it possible to move the support bracket downward in a stable state, and effectively absorb the load in conjunction with increase in width caused by the rod-shaped member.

Furthermore, in the third embodiment, the plurality of third slits 30, 31 are disposed in a series arrangement across the second move-in prohibition means (second closed portion 35). Thus, when a load corresponding to the first value K1 or more is entered into the support bracket 8 supporting the stopper 7, the first leg 51 of the support bracket 8 can be stepwise moved downward to effectively absorb the load. This makes it possible to effectively suppress the occurrence of an undesirable situation where the stopper 7 receives an excessive load to cause disengagement from the support bracket 8, so as to prevent the occurrence of a second accident due to biting of the stopper into an auxiliary component of the automobile, etc.

When a load corresponding to the second value K2 or more which is greater than the first value K1 due to occurrence of a collision, for example, a collision of a pedestrian's head against the top surface of the hood 5, a move-in prohibited state according to the third move-in prohibition means (third closed portion 36) is released (or the third closed portion 36 is broken) to allow the rod-shaped member consisting of the threaded shaft of the mounting bolt 10 to be moved into the first slit 32. This makes it possible to allow the first leg 51 of the support bracket 8 to be guided by the rod-shaped member and further moved downward along the rear wall portion 27 of the upper shroud 1 (mounting portion of an automobile body member), and adequately absorb the load so as to effectively cushion a shock to be applied to the pedestrian's head etc.

Further, in the third embodiment, the width dimension of the first slit 32 is set to be less than the outer diameter of the threaded shaft of the mounting bolt 10. Thus, when the rod-shaped member consisting of the threaded shaft of the mounting bolt 10 is moved into the first slit 32, the first slit 32 will be increased in width. Then, in conjunction with the increase in width of the first slit 32, the support hole 21 fittingly engaged with the stopper 7 is expandingly deformed, and this expanding deformation of the support hole 21 is accelerated by the presence of the second slit 33 so as to facilitate allowing the stopper 7 to be disengaged from the support hole 21. That is, according to a function of the disengagement facilitation means consisting of the mounting bolt 10 and the first and second slits 32, 33, the stopper 7 can be disengaged from the support hole 21 quickly and reliably in response to an action of a load corresponding to the second value K2 or more. This makes it possible to reliably prevent the stopper 7 from being pinched between the hood 5 and the upper shroud 1 so as to cushion a shock to be applied to the pedestrian's head reliably and effectively.

Furthermore, in the third embodiment, the escaping space consisting of the concave portion 28 is formed in the rear region of the top surface of the upper shroud 1 to receive therein the stopper 7 disengaged from the support hole 21 formed in the support bracket 8. This makes it possible to effectively prevent the occurrence of an undesirable situation where the stopper 7 is lost, or bitten into an auxiliary component in an engine compartment.

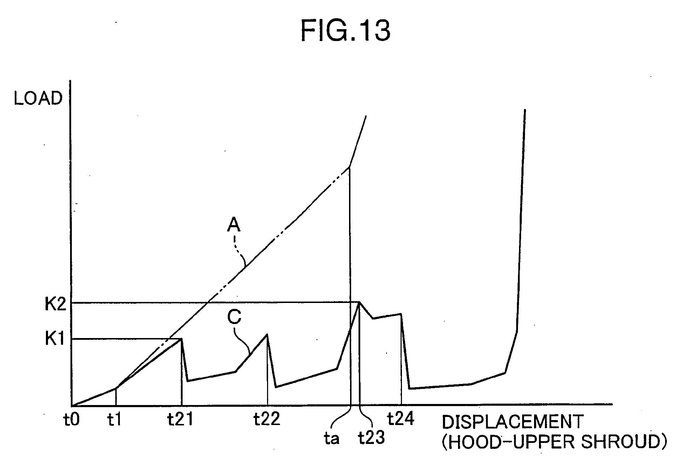

With reference to the graph of FIG 13, an operation of the automobile hood stopper structure according to the third embodiment will be described below.

As indicated by the solid line C in FIG. 13, before Time t₁ when a load entered into the stopper 7 reaches a given value, the stopper 7 is elastically deformed to absorb an impact energy. When a load having the first value or more acts on the stopper 7 due to occurrence of a situation where a pedestrian who comes into contact with the front of a stopped or slow-moving automobile falls down and runs on the hood, the first and second closed portions 34, 35 of the support bracket 8 are stepwise broken by the rod-shaped member consisting of the threaded shaft of the mounting bolt 10 to stepwise absorb the load at Times t₂₁ and t₂₂ corresponding to these breakages, and allow the first leg 51 of the support bracket 8 to be moved downward along the rear wall portion 27 of the upper shroud 1 by a certain distance. Thus, the hood 5 brings out a cushioning function to effectively absorb the first load. In this process, each of the loads for allowing the rod-shaped member to be moved into the third slits 30, 31 at Times t₂₁ and t₂₂ can be adjusted readily and adequately by setting each of the breaking strengths of the first and second closed portions 34, 35 at an appropriate value.

When a load having the second value K2 or more which is greater than the first value K1 acts on the stopper 7 due to occurrence of a collision, for example, a collision of a pedestrian's head against the top surface of the hood 5, the first and second closed portions 34, 35 of the support bracket 8 are stepwise broken in the above manner, and then third closed portion 36 is broken by the rod-shaped member consisting of the threaded shaft of the mounting bolt 10 to further absorb the load at Time t₂₃ corresponding to this breakage, and allow the first leg 51 of the support bracket 8 to be largely moved downward along the rear wall portion 27 of the upper shroud 1. Thus, the hood 5 sufficiently brings out a cushioning function to effectively absorb the second load. Further, the width of the first slit 32 is increased by the rod-shaped member moved into the first slit 32. Simultaneously, the support hole 21 fittingly engage with the stopper 7 is expandingly deformed, and this expanding deformation of the support hole 21 is accelerated by the second slit 33. Thus, at an appropriate time or Time t₂₄ when the support hole 21 has a sufficient expanding deformation, the stopper 21 can be reliably disengaged from the support hole 21. This makes it possible to reliably avoid the situation where the stopper 7 is pinched between the hood 5 and the upper shroud 1 or the automobile body member so as to effectively cushion a shock to be applied to the pedestrian's head etc.

For example, as indicated by the two-dot chain line A in FIG. 13, if the stopper 7 is pinched between the hood 5 and the upper shroud 1 or the automobile body member, a load acting on the stopper 7 will be increased at an approximately constant rate between Time t₀ when a collision of a pedestrian's head against the top surface of the hood 5 occurs and Time tₐ when the pinching of the stopper 7 occurs. Then, after Time tₐ when the pinching of the stopper 7 occurs, the deformation of the hood 5 is hindered by the stopper. Thus, it is inevitable that an impact load be applied to the pedestrian's head etc., will be sharply increased.

In contrast, according to the third embodiment designed to disengage the stopper 7 from the support hole 21 at an appropriate timing, as indicated by the solid line C in FIG. 13, the hood 5 can be largely deformed at Time t₂₄ when the stopper 7 is disengaged. Thus, before the hood 5 comes into contact with the upper shroud 1, an impact energy can be sufficiently absorbed wile lowering a peak load as compared to a conventional structure, and a downward stroke of the hood 5 can be sufficiently ensured to quickly reduce an impact load be applied to the pedestrian's head etc. Further, the automobile hood stopper structure according to the third embodiment has an advantage of being able to set the breaking strength of the third closed portion 36 at an appropriate value so as to adjust an the load for allowing the rod-shaped member to be moved into the first slit 32 at Time t₂₃, readily and adequately, and appropriately adjust Time t₂₄ when the stopper 7 is disengaged, in connection with Time t₂₃.

In place of the structure in the third embodiment where the entire width dimension of the slits 30, 31, 32 is set to be less than the outer diameter of the threaded shaft of the mounting bolt 10, each of the slits 30, 31, 32 may partially have a narrowed portion with a width dimension less than the outer diameter of the threaded shaft of the mounting bolt 10.

### [FOURTH EMBODIMENT]

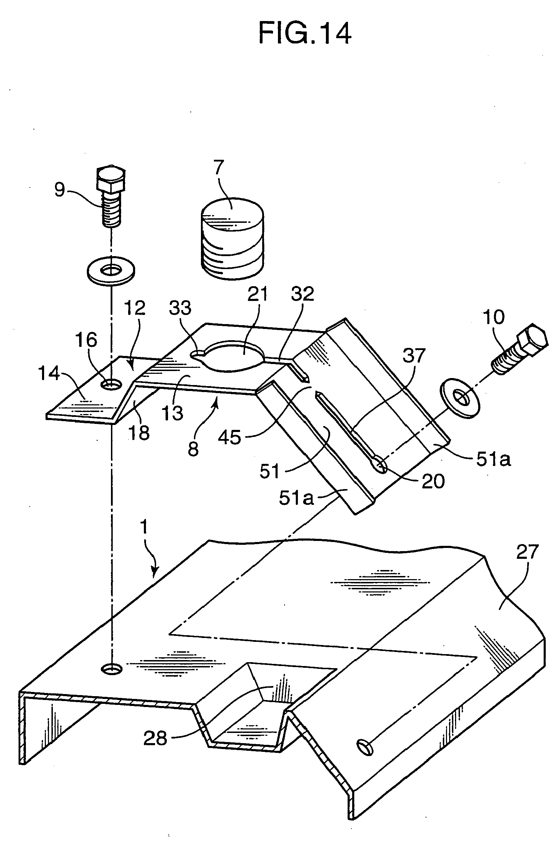

FIG. 14 shows an automobile hood stopper structure according to a fourth embodiment of the present invention. In the automobile hood stopper structure according to the fourth embodiment, a support bracket 8 has a first leg 51 which is formed with a third slit 37 having a width less than an outer diameter of a threaded shaft of a mounting bolt 10 in such a manner as to be in communication with an insertion hole 20, and first and second slits 32, 33 at the same position as that in the third embodiment in such a manner as to be in communication with a support hole 21 fittingly engaged with a stopper 7. The support bracket 8 also has move-in prohibition means consisting of a closed portion 45 for prohibiting the threaded shaft of the mounting bolt 10 from being move into the first slit 32.

In the fourth embodiment, the combination of the mounting bolt 10 and the third slit 37 serves as first load-absorbing means for absorbing a load corresponding to a first value K1 or more which is entered into the stopper 7, while allowing the stopper 7 to be moved downward, and the combination of the mounting bolt 10, the closed portion 45 and the first slit 32 serves as second load-absorbing means for absorbing a load corresponding to a second value K2 or more which is entered into a stopper 7, while allowing the stopper 7 to be moved downward. Further, the combination of the mounting bolt 10 and the first and second slits 32, 33 serves as disengagement facilitation means for facilitating allowing the stopper 7 to be disengaged from the support hole 21 when a load having the second value K2 acts on the stopper 7.

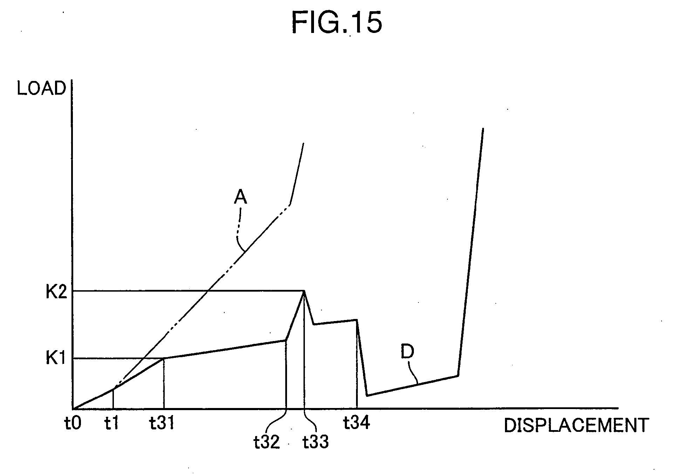

In the fourth embodiment, as indicated by the solid line D in FIG. 15, the stopper 7 can be elastically deformed to absorb an impact load, before Time t₁ when a load entered into the stopper 7 reaches a given value. When a load having the first value K1 or more acts on the stopper 7 due to occurrence of a situation where a pedestrian who comes into contact with the front of a stopped or slow-moving automobile falls down and runs on the hood, the threaded shaft of the mounting bolt 10 inserted into the insertion hole 20 of the support bracket 8 is moved into the third slit 37 along with increase in the load. Then, between Time t₃₁ when the threaded shaft is initially moved into the third slit 37 and Time t₃₂ when the threaded shaft comes into contact with the closed portion 45, the load is not significantly increased. During this period, the first leg 51 of the support bracket 8 is guided by the threaded shaft and moved downward along a rear wall of a shroud upper 1 to stably absorb the load.

When a load correspondingly to the second value K2 or more acts on the support bracket 8 through the stopper 7, the threaded shaft of the mounting bolt 10 is moved into the third slit 37, and then the move-in prohibition means consisting of the closed portion 45 is broken by the threaded shaft. At Time t₃₃ corresponding to this breakage, the load is absorbed, and the threaded shaft is moved into the first slit 32 at an accurate timing. Then, in conjunction with increase in width of the first slit 32 receiving the threaded shaft allowed to be moved thereinto, the support hole 21 is expandingly deformed. Thus, the stopper 7 is disengaged from the support hole 21, and received in an escaping space consisting of a concave portion 28 formed in an rear region of a top surface of the upper shroud 1. At Time t₃₄ when the stopper 7 is disengaged, the hood 5 is largely deformed to sharply reduce an impact load to be applied to the pedestrian's head etc.

### [FIFTH EMBODIMENT]

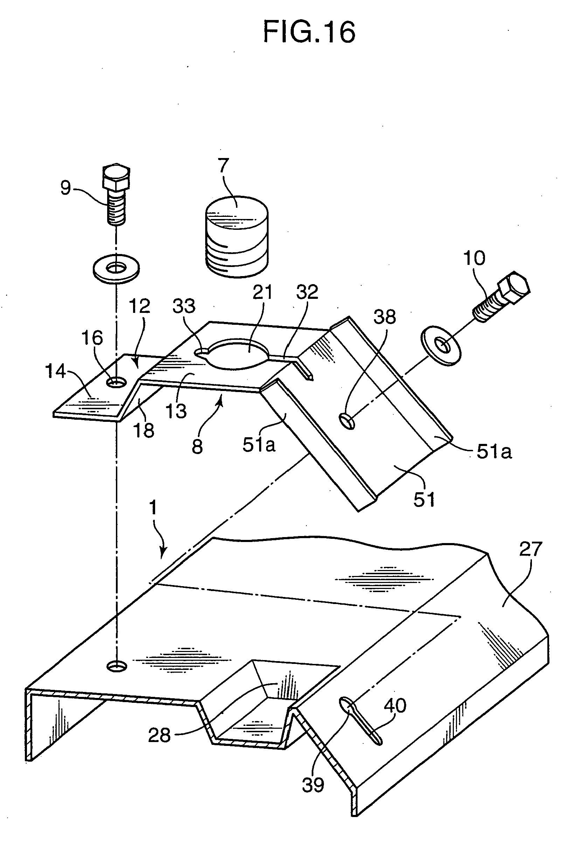

FIG. 16 shows an automobile hood stopper structure according to a fifth embodiment of the present invention. In the automobile hood stopper structure according to the fifth embodiment, a support bracket 8 has a first leg 51 which is formed with an insertion hole 38 penetrated by a threaded shaft of a mounting bolt 10, and first and second slits 32, 33 at the same position as that in the third and fourth embodiments in such a manner as to be in communication with a support hole 21 fittingly engaged with a stopper 7. A mounting portion of an automobile body member consisting of a rear wall portion 27 of an upper shroud 1 is formed with an insertion hole 39 penetrated by the threaded shaft, and an elongated hole-shaped slit 40 extending downward from an lower edge region of the insertion hole 39.

In the fifth embodiment, when a load having a given value acts along an inclined surface of the rear wall portion 27, the slit 40 formed in the rear wall portion 27 of the upper shroud 1 allows the threaded shaft of the mounting bolt 10 to be slidingly moved therealong. Further, the first and second slits 32, 33 serve as disengagement facilitation means for facilitating allowing the stopper 7 to be disengaged from the support hole 21 when the load is subsequently increased.

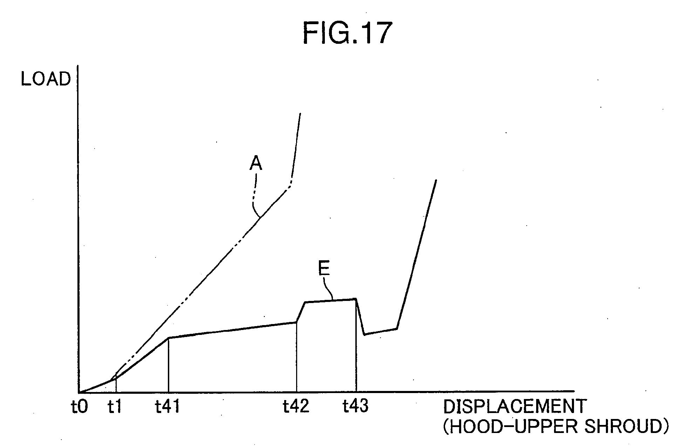

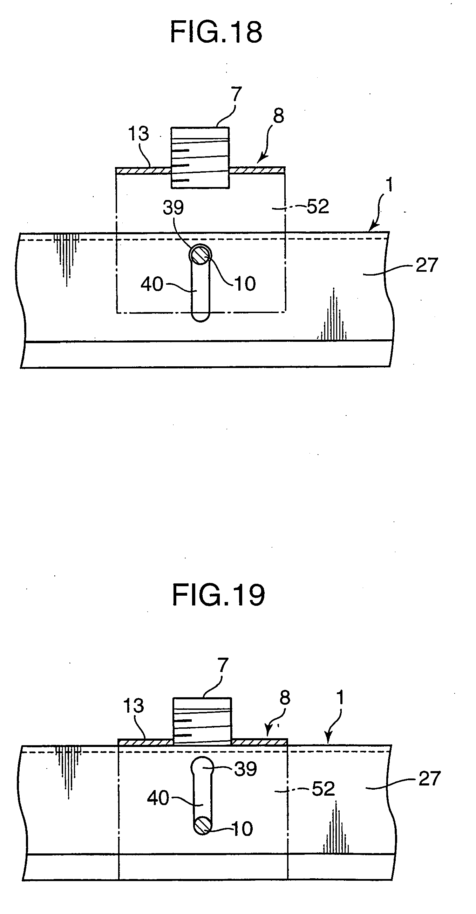

In the fifth embodiment, as indicated by the solid line E in FIG. 17, the stopper 7 can be elastically deformed to absorb an impact load, before Time t₁ when a load entered into the stopper 7 reaches a given value. The threaded shaft of the mounting bolt 10 inserted into the insertion hole 39 of the upper shroud 1 at Time t₁ as shown in FIG. 18 is moved into the slit 40 in response to subsequent increase in the load as shown in FIG. 19. Then, between Time t₄₁ when the threaded shaft is initially moved into the slit 40 and Time t₄₂ when the threaded shaft comes into contact with a lower end of the slit 40, the load is not significantly increased. During this period, the first leg 51 of the support bracket 8 is guided by the threaded shaft and moved downward along the rear wall portion 27 of the shroud upper 1 to stably absorb the load. In response to subsequent increase in the load, the first and second slits 32, 33 in communication with the support hole 21 induce an expanding deformation of the support hole 21. Thus, the stopper 7 is disengaged from the support hole 21, and received in an escaping space consisting of a concave portion 28 formed in an rear region of a top surface of the upper shroud 1. At Time t₄₃ when the stopper 7 is disengaged, the hood 5 is largely deformed to sharply reduce an impact load to be applied to the pedestrian's head etc.

The fifth embodiment where the slit 40 for allowing the rod-shaped member to be slidingly displaced therealong is formed in the mounting portion of the automobile body member consisting of the rear wall portion 27 of the upper shroud 1 can avoid a problem about deterioration in rigidity of the support bracket 8 as in the third and fourth embodiments where the slit (30 etc.) for allowing the rod-shaped member to be slidingly displaced therealong is formed in the support bracket 8. Thus, the support bracket 8 can be smoothly moved downward in a sliding manner while preventing he support bracket from being bent in the event of the collision without reinforcement, such as formation of the flanges 51a in the support bracket 8 or increase in thickness of the support bracket 8. Therefore, if there is not any problem about deterioration in rigidity of an automobile body due to formation of the slit 40 in the mounting portion of the automobile body member, and the mounting portion does not have any difficult condition, such as material, thickness or shape, in forming the slit 40 therein, it is preferable to employ the structure according to the fifth embodiment.

If there is a problem about deterioration in rigidity of an automobile body due to formation of the slit 40 in the mounting portion of the automobile body member, or the mounting portion has difficult conditions, such as material, thickness or shape, in forming the slit 40 therein, it is preferable to employ the structure according to the third or fourth embodiment where the slit (30 etc.) for allowing the rod-shaped member to be slidingly displaced therealong is formed in the support bracket 8.

### [SIXTH EMBODIMENT]

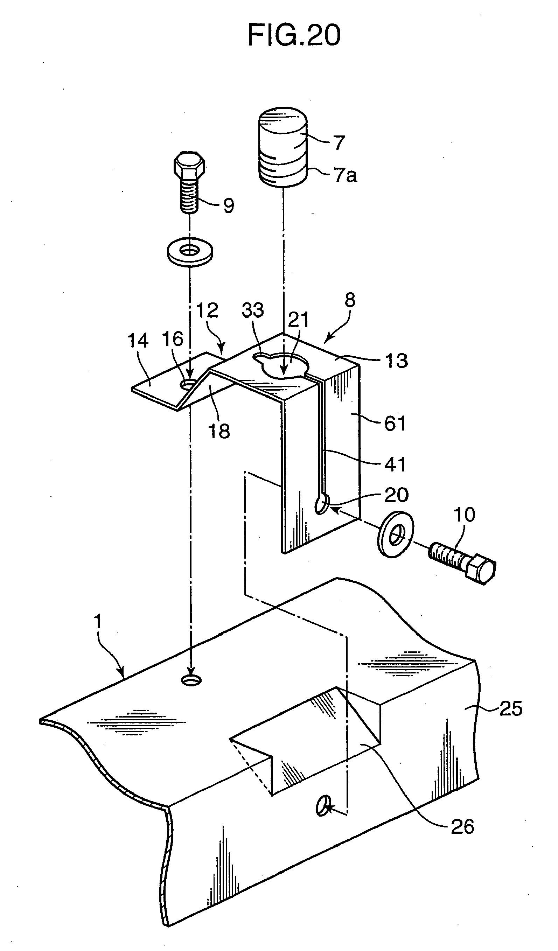

FIG 20 shows an automobile hood stopper structure according to a sixth embodiment of the present invention. In the automobile hood stopper structure according to the sixth embodiment, a support bracket 8 has a first leg 61 formed to extend vertically. Corresponding to the first leg 61, a shroud upper 1 serving as a mounting portion of the first leg 61 has a rear wall 25 formed to extend vertically: The upper shroud 1 is formed with a concave portion 26 having a width dimension greater than that of the support bracket 8 and a rearward and downward inclined surface, in a rear region of a top surface thereof, as with the first embodiment. This concave portion 26 serves as an escaping space for avoiding a contact between the upper shroud 1 and a stopper 7.

The support bracket 8 is formed with a first slit 41 in the first leg 61 and a top portion thereof, an insertion hole 20 penetrated by a mounting bolt 10, and a support hole 21 fittingly engaged with the stopper 7. The first slit 41 extends to provide communication between an upper edge region of the insertion hole 20 and a rear edge region of the support hole 21, and has a width dimension less than an outer diameter of the mounting bolt 10. Further, the support bracket 8 is formed with a second slit 33 consisting of a U-shaped notch on the opposite side of the first slit 41 relative to the support hole 41 (in the front edge region of the support hole 41), as with the third to fifth embodiment.

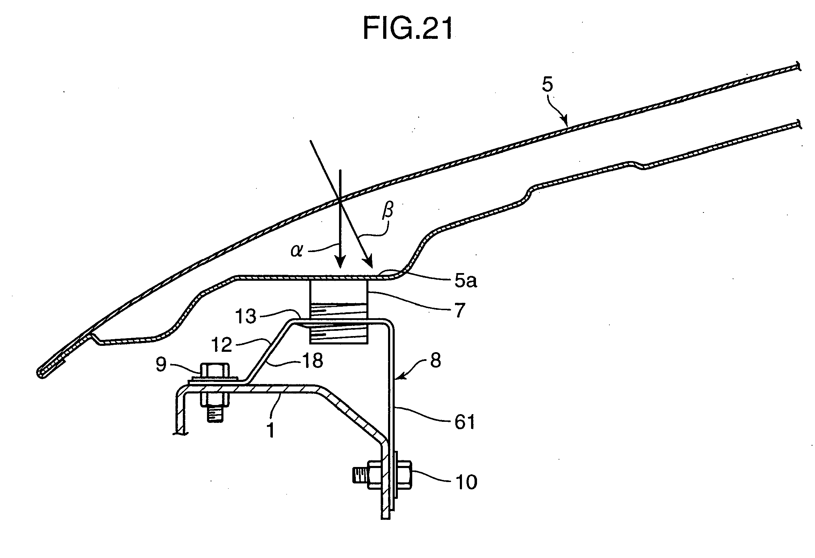

The automobile hood stopper structure according to the sixth embodiment, such as a rigidity of the support bracket 8, a fastening force of the mounting bolt 10 and the width dimension of the first slit 41, is designed to prevent the support bracket 8 supporting the stopper 7 from being plastically deformed and prevent the first leg 61 of the support bracket 8 from being moved vertically downward, when a load is entered from a hood 5 into the stopper 7 in an approximately vertical direction as indicated by the arrow α in FIG. 21 during closing of the hood 5.

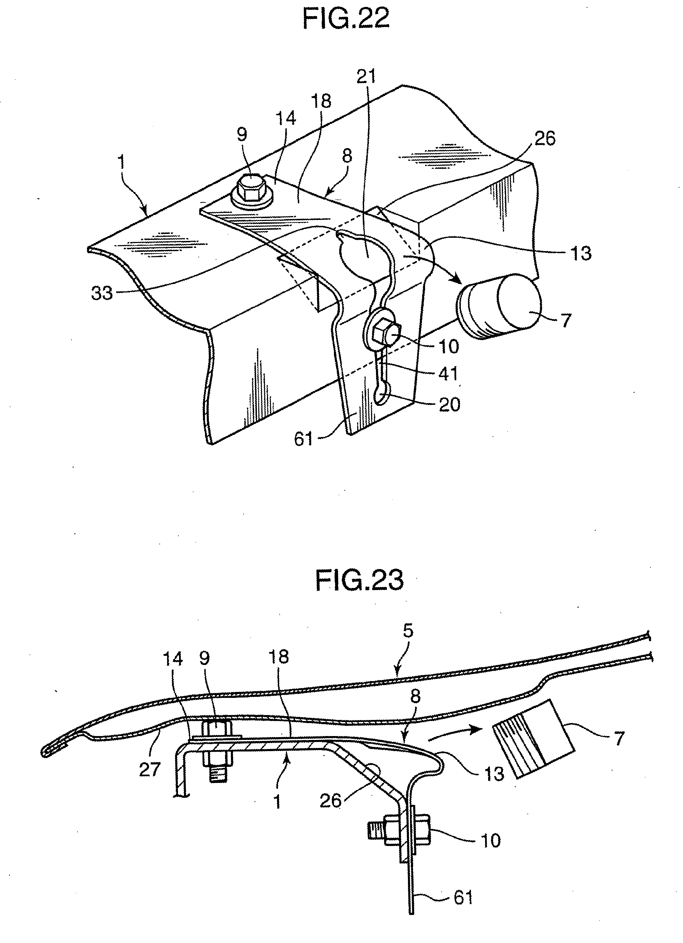

Further, the automobile hood stopper structure according to the sixth embodiment, such as the rigidity of the support bracket 8, is designed such that, when a load greater than that during closing of the hood 5 acts from the hood 5 on the stopper 7 in a rearward and downward inclined direction as indicated by the arrow β in FIG. 21 due to occurrence of a collision, for example, a collision of a pedestrian's head against a top surface of the hood 5, an inclined portion 18 of the support bracket 8 extending in a rearward and upward direction is plastically deformed in such a manner as to be tilted down on the top surface of the upper shroud 1, and a threaded shaft of the mounting bolt 10 is moved into the first slit 41 to allow the first leg 61 of the support bracket 8 to be moved vertically downward along the rear wall 25 of the upper shroud 1. When the stopper 7 supported by the support bracket 8 is moved in a rearward direction of the automobile body in conjunction with the deformation and movement of the support bracket 8, the support hole 21 is expandingly deformed due to increase in width of the first slit 41 receiving the threaded shaft of the mounting bolt 10 allowed to be moved thereinto, and this expanding deformation of the support hole 21 is accelerated by the presence of the second slit 33. This facilitates allowing the stopper 7 to be disengaged from the support hole 21, as shown in FIGS. 22 and 23. That is, the combination of the mounting bolt 10 and the first and second slits 41 and 33 serves as disengagement facilitation means for facilitating allowing the stopper 7 to be disengaged from the support hole 21.

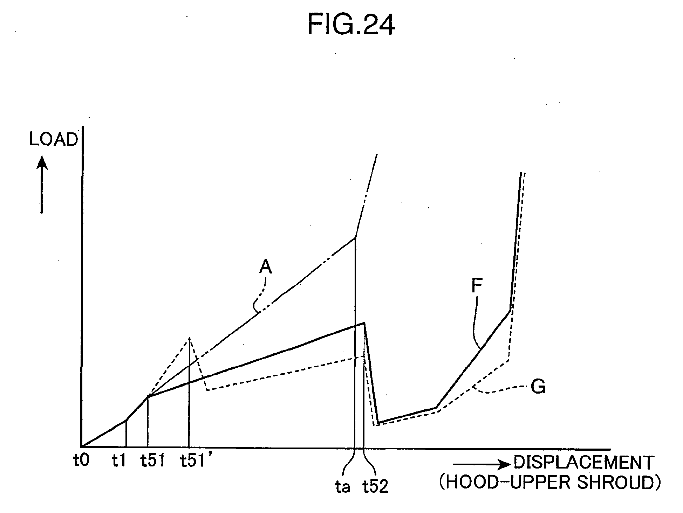

In the sixth embodiment, as indicated by the solid line F in FIG. 24, the stopper 7 can be elastically deformed to absorb an impact load, before Time t₁ when a load entered into the stopper 7 reaches a given value. The threaded shaft of the mounting bolt 10 inserted into the insertion hole 20 of the support bracket 8 at Time t₁ as shown in FIG. 21 is moved into the slit 41 in response to subsequent increase in the load as shown in FIG. 22. Then, before the threaded shaft is moved toward the upper side of the slit 41 by a certain distance after Time t₅₁ when the threaded shaft is initially moved into the slit 41, the load is not significantly increased. During this period, the first leg 61 of the support bracket 8 is guided by the threaded shaft and moved vertically downward along the rear wall 25 of the shroud upper 1 to stably absorb the load. In conjunction with increase in width of the first slit 41 receiving the threaded shaft allowed to be moved thereinto, the support hole 21 is expandingly deformed to allow the stopper 7 to be disengaged from the support hole 21. At Time t₅₁ when the stopper 7 is disengaged, the hood 5 is largely deformed to sharply reduce an impact load to be applied to the pedestrian's head etc. In addition, the escaping space consisting of the concave portion 26 having the rearward and downward inclined surface is formed in the rear region of the top surface of the upper shroud 1. Thus, a top portion 13 and the first leg 61 of the support bracket 8 can be displaced in the rear and lower side of the upper shroud 1 or automobile body member without hindrance of the top surface of the upper shroud 1, as shown in FIGS. 22 and 23. Further, the bottom of the stopper 7 fittingly engaged in the support hole 21 can be brought into contact with the inclined surface of the concave portion 26 to readily disengage the stopper 7 from the support hole 21. This makes it possible to more effectively prevent the occurrence of an undesirable situation where the stopper 7 is pinched between the hood 5 and the automobile body member.

### [Seventh Embodiment]

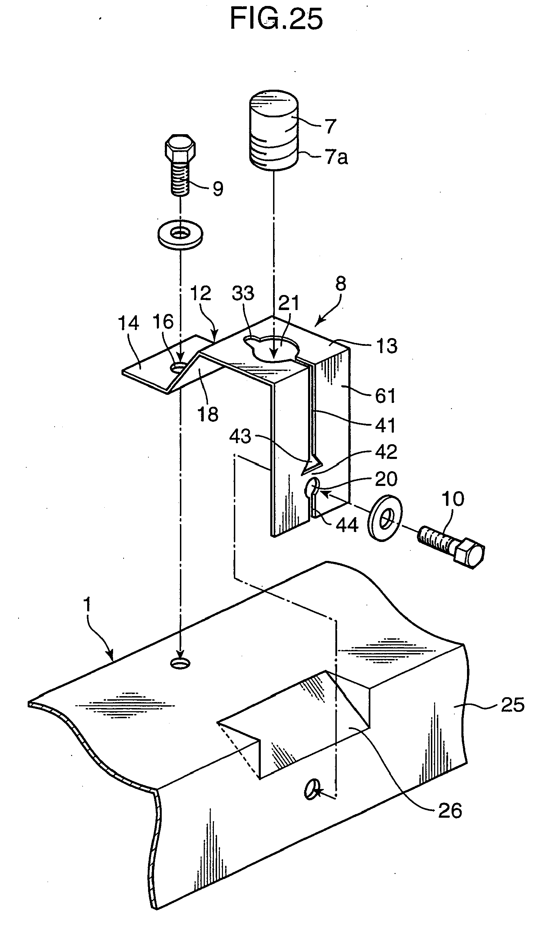

FIG. 25 shows an automobile hood stopper structure according to a seventh embodiment of the present invention. In the automobile hood stopper structure according to the seventh embodiment, a support bracket 8 is formed with a first slit 41, an insertion hole 20 penetrated by a mounting bolt 10, and move-in prohibition means consisting of a closed portion 42 disposed between the first slit 41 and the insertion hole 20 to inhibit a threaded shaft of the mounting bolt 10 from being moved into the first slit 41. When a load entered into the support bracket is less than a given value, the move-in of the threaded shaft into the first slit 41 will be inhibited by the move-in prohibition means.

The automobile hood stopper structure according to the seventh embodiment has advantages of being able to prevent the stopper 7 from being disengaged from a support hole 21 formed in the support bracket 8 during closing of a hood 5 so as to effectively absorb an impact energy acting during closing of the hood 5, and to allow the stopper 7 to be engaged from the support hole 21 at an appropriate timing in the event of a collision, for example, a collision of a pedestrian's head against the top surface of the hood 5, so as to effectively cushion a shock to be applied to the pedestrian's head etc.

More specifically, the move-in inhibition means consisting of the closed portion 42 can bear a load entered into the support bracket 8 during closing of the hood 5 to prevent a rod-shaped member consisting of the threaded shaft of the mounting bolt 10 from being moved into the first shaft 41. Thus, as indicated by the dotted line G in FIG. 24, the stopper 7 can be reliably supported by the support bracket 8 when a load entered into the support bracket 8 is less than the given value, to effectively absorb an impact energy during closing of the hood 5.

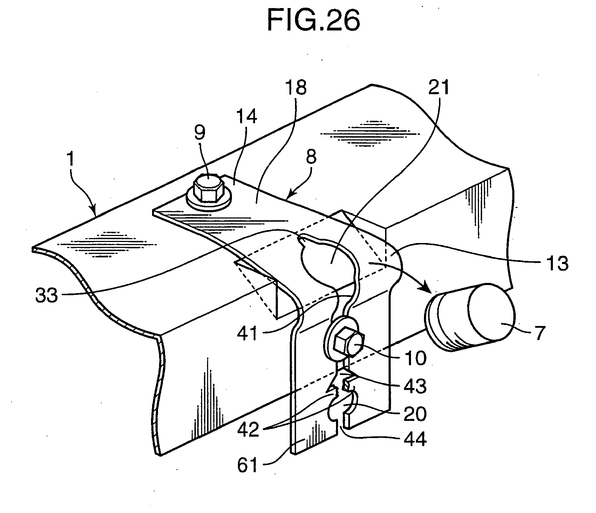

When a load having the given load or more is entered into the support bracket 8 supporting the stopper 7 due to occurrence of a collision, for example, a collision of a pedestrian's head against the top surface of the hood 5, the closed portion 42 is broken to allow the rod-shaped member consisting of the threaded shaft of the mounting bolt 10 to be moved into the first slit 41 so as to reliably disengage the stopper 7 from the support hole 21 of the support bracket 8, as shown in FIG. 26. Thus, the automobile hood stopper structure according to the seventh embodiment has an advantage to be able to adjust a strength of the closed portion 42 at an appropriate value so as to set a disengagement load of the stopper 7 at an adequate value.

In the seventh embodiment, a proximal end of the first slit 41 of the support bracket 8 or a region of the first slit 41 close to the insertion hole 20 penetrated by the mounting bolt 10 is formed as a widening facilitation portion 43 having a tapered shape having a slit width which is gradually narrowed toward the support hole 21 supporting the stopper 7. Thus, as indicated by the dotted line in FIG. 24, at Time t_{51'} when a load having the given value or more is entered into the support bracket 8, and the closed portion 42 is broken, the threaded shaft of the mounting bolt 10 can be smoothly moved into the first slit 41 using the widening facilitation portion 43 as a guiding portion to effectively cause an expanding deformation in the first slit 41 and the support hole 21 supporting the stopper so as to reliably disengage the stopper from the support hole 21.

Further, in the seventh embodiment, the first leg 61 has a slit 44 formed on the opposite side of the first slit 41 to extend from a lower end thereof to a position in communication with the insertion hole 20 penetrated by the mounting bolt 10. Thus, when a load having the given value or more is entered into the support bracket 8, and the threaded shaft is moved into the first slit 41, the slit 44 can facilitate increasing the width of the first leg 41 and the first slit 41 of the support bracket 8. This makes it possible to more quickly increase the width of the first slit 41 when a load having the given value or more is entered into the support bracket 8, so that the support hole 21 supporting the stopper 7 can be expandingly deformed to more effectively disengage the stopper therefrom.

While the automobile hood stopper structure according to each of the above embodiments employs the move-in prohibition means consisting of various types of closed portions (34 etc.) to prohibit the threaded shaft of the mounting bolt 10 from being moved into various types of slits (30 etc), a cover plate may be prepared separately from and attached to the support bracket 8 to partially cover one slit formed in the support bracket 8 so as to prohibit the move-in of the threaded shaft of the mounting bolt 10. Alternatively, the move-in of the threaded shaft may be prohibited by partially reducing the width dimension of the slit or partially increasing the thickness of the longitudinal edges of the slit. Further, instead of the move-in prohibition means, a load at a time when the threaded shaft is moved into the slit (30 etc.) may be adjusted by changing the width of the slit (30 etc.) or changing the thickness of the support bracket 8 around the slit (30 etc.).

While the disengagement facilitation means for facilitating allowing the stopper to be disengaged from the support hole 21, in each of the above embodiments, is composed of the first slit (32 etc.) and second slit 33 formed in the support bracket 8 in such a manner as to be in communication with the support hole 21 supporting the stopper 7, and the threaded shaft of the mounting bolt 10 attached to the automobile body member to increase the width of the first slit (32 etc.) when a load having the given value of more acts on the stopper 7, so as to expandingly deform the support hole 21, the disengagement facilitation means may be composed of a spring member adapted to expandingly deform the support hole 21 in a forcible manner or an explosive adapted to disengage the stopper 7 from the support hole 21 in a forcible manner, when a load having the given value of more acts on the stopper 7.

While the above embodiments have been described in connection with examples where the support bracket 8 is attached to the automobile body member consisting of the upper shroud 1, the support bracket 8 may be attached onto an upper surface of a front fender panel instead of the upper shroud 1. Further, instead of the hood 5 designed to be opened rearward about the hood hinge 6 located on the rear end of the hood 5, as in the above embodiments, the present invention may also be applied to a hood stopper structure for an automobile having a hood designed to be opened frontward.

In summary, the present invention provides an automobile hood stopper structure wherein a stopper serving as a cushioning member during closing of a hood attached to a front potion of an automobile body is disposed between the hood and an automobile body member, which comprises a support bracket formed with a support portion supporting the stopper, and attached to the automobile body member. The automobile hood stopper structure is designed such that, when the stopper supported by the support bracket is subjected to the action of a load having a given value or more which is greater than a load acting thereon during closing of the hood, the support bracket is deformed to thereby facilitate a downward movement of the stopper (claim 1 in the appended claims).

The automobile hood stopper structure of the present invention is designed such that, when the stopper serving as a cushioning member is subjected to the action of a load having a given value or more which is greater than a load acting during closing of the hood, the support bracket supporting the stopper is deformed to allow the stopper to be moved downward. Thus, according to this simplified structure based on supporting the stopper by the support bracket, an impact energy during closing of the hood can be effectively absorbed. In addition, when the stopper is subjected to the action of a load greater than that during closing of the hood due to occurrence of a collision, for example, a collision of a pedestrian's head against a top surface of the hood, the load can be effectively absorbed to effectively cushion a shock to be applied to the pedestrian's head.

In the event of a collision, for example, a collision of a pedestrian's head against a top surface of the hood, a load is generally entered from the pedestrian's head into a stopper through the hood, obliquely rearward from above or in a rearward and downward inclined direction. Thus, preferably, the above automobile hood stopper structure is designed such that a direction of a load to be entered into the stopper during closing of the hood is approximately vertical, and the support bracket has a leg which is attached to the automobile body member and designed to have a greater supporting rigidity against a load entered into the stopper supported by the support bracket, in an approximately vertical direction, than against a load entered into the stopper obliquely rearward from above (claim 2 in the appended claims).

According to this first specific structure, in the operation for closing the hood, the stopper supported by the support bracket can be elastically deformed while preventing the leg of the support bracket from being plastically deformed, to thereby absorb an impact energy acting during closing of the hood. In addition, when the load having the given value or more acts on the support bracket obliquely rearward from above due to occurrence of a collision, such as a collision of a pedestrian's head against the top surface of the hood, the leg of the support bracket can be plastically deformed to allow the support portion supporting the stopper to be moved rearward downward and consequently allow the hood to be displaced downward, so that an impact energy can be absorbed to effectively cushion a shock to be applied to the pedestrian's head etc.

In the above first specific structure, the support bracket may be attached to an upper shroud disposed in the front portion of the automobile body. In this case, preferably, the leg of the support bracket includes first and second legs disposed, respectively, on the rearward and frontward sides of the support bracket across an rear end region of a top surface of the upper shroud, and the upper shroud has a concave portion formed in the rear end region of the top surface thereof and adapted to prevent the stopper supported by the support bracket from coming into contact with the upper shroud when a load capable of moving the stopper supported by the support bracket toward the rear and lower side of the upper shroud is entered into the stopper (claim 3 in the appended claims).

According to this second specific structure, even if each length of the legs of the support bracket is reduced to downsize the support bracket, in response to a load acting in a rearward and downward inclined direction due to occurrence of a collision, such as a collision of a pedestrian's head against the top surface of the hood, the stopper supported by the support bracket can be largely moved toward the rear and lower side of the upper shroud without contact with the upper shroud, so that an impact energy can be sufficiently absorbed to effectively cushion a shock to be applied to the pedestrian's head etc.

In the above second specific structure, preferably, the first leg of the support bracket has a high rigidity portion for preventing the stopper supported by the support bracket from coming into contact with the first leg when a load capable of moving the stopper supported by the support bracket toward the rear and lower side of the upper shroud is entered into the stopper (claim 4 in the appended claims).

This third specific structure has an advantage of being able to effectively prevent the risk that, when the stopper supported by the support bracket is moved toward the rear and lower side of the upper shroud in response to a load entered obliquely rearward from above due to occurrence of a collision, such as a collision of a pedestrian's head against the top surface of the hood, the stopper comes into contact with the first leg to hinder the support bracket from being deformed.

In the above third specific structure, preferably, the support bracket includes a tilting facilitation portion for facilitating allowing each of the first and second legs to be tilted toward a rear portion of the automobile body when a load is entered into the stopper supported by the support bracket, obliquely rearward from above (claim 5 in the appended claims).

According to this fourth specific structure, in response to a load entered obliquely rearward from above due to occurrence of a collision, such as a collision of a pedestrian's head against the top surface of the hood, a tilting movement of each of the first and second legs of the support bracket can be facilitated to allow the stopper to be smoothly moved toward the rear and lower side of the upper shroud so as to effectively cushion a shock to be applied to the pedestrian's head etc.

For example, the tilting facilitation portion may consist of a rearward and upward inclined portion formed in at least one of the first and second legs of the support bracket (claim 6 in the appended claims).

According to this fifth specific structure, the rearward and upward inclined portion formed in at least one of the first and second legs of the support bracket can be tilted down to allow the stopper to be smoothly moved toward the rear and lower side of the upper shroud in a simplified structure so as to effectively cushion a shock to be applied to the pedestrian's head etc.

In the above fifth specific structure, preferably, the tilting facilitation portion consisting of the rearward and upward inclined portion is formed in each of the first and second legs disposed, respectively, on the rearward and frontward sides of the support bracket. In this case, the inclined portion formed in the first leg may have a lower end located rearward relative to an action line of the approximately vertical load to be entered during closing of the hood, and the inclined portion formed in the second leg may have a lower end located frontward relative to the action line of the approximately vertical load to be entered during closing of the hood (claim 7 in the appended claims).

According to this sixth specific structure, when the approximately vertical load is entered into the stopper supported by the support bracket during closing of the hood, the inclined portion of the first leg has a moment acting in a direction allowing the inclined portion of the first leg to be raised up, and the inclined portion of the second leg has a moment acting in a direction allowing the inclined portion of the second leg to be tilted down. Thus, these moments are counteracted to one another. This provides an advantage of being able to effectively prevent a plastic deformation of the support bracket.

In the above sixth specific structure, preferably, the lower end of the inclined portion formed in the first leg is located frontward relative to an action line of the load capable of moving the stopper supported by the support bracket, toward the rear and lower side of the upper shroud (claim 8 in the appended claims).

According to this seventh specific structure, when the load having the given value or more is entered into the stopper obliquely rearward from above due to occurrence of a collision, such as a collision of a pedestrian's head against the top surface of the hood, both the inclined portions of the first and second legs have a moment acting in the direction allowing these inclined portions to be tilted down. Thus, the first and second legs of the support bracket can effectively have a plastic deformation to allow the support portion supporting the stopper to be moved toward the rear and lower side of the upper shroud and consequently allow the hood to be displaced downward, so that an impact energy can be absorbed to effectively cushion a shock to be applied to the pedestrian's head etc.

In the automobile hood stopper structure of the present invention, the support bracket may have a leg located rearward relative to the support portion supporting the stopper, and attached to a mounting portion of the automobile body member. In this case, the leg of the support bracket and the mounting portion of the automobile body member may be disposed along a rearward and downward inclined plane, and the automobile hood stopper structure may be designed such that, when a load corresponding to the given value or more acts in a direction along the inclined plane, the leg of the support bracket is moved downward along the mounting portion of the automobile body member (claim 9 in the appended claims).

According to this eighth specific structure, in the operation for closing the hood, the stopper can be elastically deformed to absorb an impact energy acting during closing of the hood. In addition, when a load corresponding to the given value or more acts on the support bracket in the direction along the rearward and downward inclined plane due to occurrence of a collision, such as a collision of a pedestrian's head against the top surface of the hood, the leg of the support bracket can be moved downward along the mounting portion of the automobile body member to effectively cushion a shock to be applied to the pedestrian's head etc.

For example, as means for allowing the leg to be moved downward along the mounting portion of the automobile body member in the above eighth specific structure, it may be contemplated that the mounting portion of the automobile body member is provided with a rod-shaped member fixed thereto, and the leg of the support bracket is formed with an insertion portion penetrated by the rod-shaped member, and a slit adapted to allow the rod-shaped member to be slidingly displaced therealong when a load corresponding to the given value or more acts in the direction along the inclined plane (claim 10 in the appended claims).

According to this ninth specific structure, when the load having the given value or more acts on the support bracket in the direction along the rearward and downward inclined plane due to occurrence of a collision, such as a collision of a pedestrian's head against the top surface of the hood, the leg of the support bracket is guided by the rod-shaped member fixed to the mounting portion of the automobile body member, and moved downward. This makes it possible to stably cushion a shock to be applied to the pedestrian's head etc. If there is the need for avoiding deterioration in rigidity due to formation of the slit in view of a high contribution rate of the mounting portion to enhanced rigidity, or the mounting portion has difficult conditions, such as material, thickness or shape, in forming the slit therein, as compared to the support bracket, it is suitable to employ the ninth specific structure having the slit formed in the support bracket.

Alternatively, as the means for allowing the leg to be moved downward along the mounting portion of the automobile body member in the above eighth specific structure, it may be contemplated that the leg of the support bracket is provided with a rod-shaped member fixed thereto, and the mounting portion of the automobile body member is formed with an insertion portion penetrated by the rod-shaped member, and a slit adapted to allow the rod-shaped member to be slidingly displaced therealong when a load corresponding to the given value or more acts in the direction along the inclined plane (claim 11 in the appended claims).

According to this tenth specific structure, when a load corresponding to the given value or more acts on the support bracket in the direction along the rearward and downward inclined plane due to occurrence of a collision, such as a collision of a pedestrian's head against the top surface of the hood, the rod-shaped member fixed to the leg of the support bracket is guided along the slit formed in the mounting portion of the automobile body member, and the support bracket is moved downward. This makes it possible to stably cushion a shock to be applied to the pedestrian's head etc. If there is not any problem about deterioration in rigidity due to formation of the slit in the mounting portion of the automobile body member, or the mounting portion does not have any difficult condition, such as material, thickness or shape, in forming the slit therein, it is suitable to employ the tenth specific structure having the slit formed in the mounting portion of the automobile body member. The tenth specific structure can eliminate the need for forming the slit in the support bracket, and remove a problem about deterioration in rigidity of the support bracket. Thus, in the event of the above collision, the support bracket can be smoothly displaced slidingly downward to absorb the load, without forming a flange in the support bracket and adding reinforcement measures, such as increase in thickness.

Preferably, the eighth specific structure having the rod-shaped member and the slit for allowing the rod-shaped member to be slidingly displaced therealong includes moved-in prohibition means for prohibiting the rod-shaped member from being moved into the slit when a load entered into the support bracket is less than that corresponding to the given value or more (claim 12 in the appended claims).

According to this eleventh specific structure, the moved-in prohibition means can prevent the rod-shaped member from being moved into the slit when a load entered into the support bracket is less than that corresponding to the given value or more. Then, when a load corresponding to the given value or more is entered into the support bracket supporting the stopper due to occurrence of a collision, such as a collision of a pedestrian's head against the top surface of the hood, a move-in prohibited state of the rod-shaped member according to the move-in prohibition means is released. This provides an advantage of being able to accurately move the rod-shaped member into the slit at an appropriate timing to allow the leg of the support bracket to be moved downward along the mounting portion of the automobile body member so as to effectively cushion a shock to be applied to the pedestrian's head etc.

In the automobile hood stopper structure of the present invention, the support bracket may be formed with a support hole supporting the stopper in a fitting manner to serve as the support portion supporting the stopper, and provided with disengagement facilitation means for facilitating allowing the stopper fittingly engaged in the support hole to be disengaged therefrom when the stopper fittingly engaged in the support hole is subjected to the action of a load having the given value or more. In this case, the disengagement facilitation means may include a first slit formed in the support bracket in such a manner as to be in communication with the support hole supporting the stopper, and a rod-shaped member fixed to the automobile body member and adapted to be moved into the first slit when the load having the given value or more acts on the stopper, so as to expand a width of the first slit to expandingly deform the support hole (claim 13 in the appended claims).

According to this twelfth specific structure, in the operation for closing the hood, the stopper can be elastically deformed to absorb an impact energy acting during closing of the hood. Further, in the event of a collision, such as a collision of a pedestrian's head against the top surface of the hood, the stopper can be reliably disengaged from the support bracket at an appropriate disengagement load to prevent occurrence of an undesirable situation where the stopper is pinched between the hood and the automobile body member, so as to effectively cushion a shock to be applied to the pedestrian's head etc. In addition, the stopper can be effectively disengaged from the support hole by means of the simplified structure designed to move the rod-shaped member composed, for example, of a threaded shaft of a mounting bolt, into the first slit in response to the load entered into the support bracket, so as to expand a width of the first slit to expandingly deform the support hole.

In the above twelfth specific structure, preferably, the support bracket is formed with a second slit on the opposite side of the first slit relative to the support hole in such a manner as to be in communication with the support hole (claim 14 in the appended claims).

According to this thirteenth specific structure, at a time when the rod-shaped member is moved into the first slit in response to the action of the load having the given value or more to the support bracket, an expanding deformation of the support hole having the stopper fittingly engaged therein can be readily initiated from the second slit to allow the stopper to be more reliably disengaged from the support hole.

In the above twelfth specific structure, preferably, the support bracket includes moved-in prohibition means disposed between the first slit formed in the support bracket and the rod-shaped member fixed to the automobile body member to prohibit the rod-shaped member from being moved into the first slit when a load entered into the support bracket is less than that corresponding to the given value or more (claim 15 in the appended claims).

According to this fourteenth specific structure, in the operation of closing the hood, a load entered into the support bracket can be borne by the moved-in prohibition means to prevent the rod-shaped member from being moved into the first slit, so that an impact energy during closing of the hood can be effectively absorbed by the stopper. In addition, when a load corresponding to the given value or more is entered into the support bracket supporting the stopper due to occurrence of a collision, such as a collision of a pedestrian's head against the top surface of the hood, a move-in prohibited state of the rod-shaped member according to the move-in prohibition means is released. This provides an advantage of being able to accurately move the rod-shaped member into the first slit at an appropriate timing to expandingly deform the support hole so as to allow the stopper to be reliably disengaged from the support hole.

In the automobile hood stopper structure of the present invention, the support bracket may be attached to an upper shroud disposed in the front portion of the automobile body, and designed to be deformed rearward downward depending on a load entered into the stopper obliquely rearward from above. In this case, the upper shroud may have a top surface formed with an escaping space for avoiding the stopper supported by the support bracket from being pinched between the hood and the upper shroud (claim 16 in the appended claims).

According to this fifteenth specific structure, in the operation for closing the hood, the stopper can be elastically deformed to absorb an impact energy acting during closing of the hood. In addition, when a load corresponding to the given value or more is entered into the support bracket through the stopper obliquely rearward from above due to occurrence of a collision, such as a collision of a pedestrian's head against the top surface of the hood, the support bracket can be deformed to allow the stopper to be moved obliquely rearward downward. Then, the escaping space formed in the top surface of the upper shroud can prevent the stopper moved rearward downward from being pinched between the hood and the upper shroud. This makes it possible to ensure a sufficient downward stroke of the hood so as to effectively cushion a shock to be applied to the pedestrian's head etc.

Preferably, this escaping space is defined by a concave portion including a partition wall hermetically shielding between upper and lower spaces of the upper shroud (claim 17 in the appended claims).

According to this sixth specific structure, when the load having the given value or more is entered into the stopper means obliquely rearward from above due to occurrence of a collision, such as a collision of a pedestrian's head against the top surface of the hood, the concave portion makes it possible to prevent the stopper from being pinched between the hood and the upper shroud so as to effectively cushion a shock to be applied to the pedestrian's head etc, without a problem about deterioration in cooling performance of a radiator due to a hot air introduced from an engine compartment to a mounting area of the radiator through the upper space of the upper shroud.

The automobile hood stopper structure of the present invention may further include first load-absorbing means operable, in response to receiving a load having a first value or more which is greater than a load to be entered into the support bracket during closing of the hood, to allow the downward movement of the stopper while absorbing the received load, and second load-absorbing means, in response to receiving a load having a second value or more which is greater than the first value, to absorb the received load in a position between the support portion supporting the stopper and the first load-absorbing means (claim 18 in the appended claims).

According to this seventeenth specific structure, in the operation for closing the hood, the stopper can be elastically deformed to absorb an impact energy acting during closing of the hood. In addition, when a load having the first value or more which is greater than a load acting during closing of the hood is entered into the support bracket due to occurrence of a situation where a pedestrian who comes into contact with the front of a stopped or slow-moving automobile falls down and runs on the hood, the first load-absorbing means can absorb the entered load while allowing the stopper to be displaced downward to some extent, so as to prevent occurrence of a second accident due to disengagement of the stopper from the support bracket. Further, when a load having the second value or more which is greater than the first value is entered into the support bracket, due to occurrence of a collision, such as a collision of a pedestrian's head against the top surface of the hood, the first load-absorbing means can firstly absorb the entered load, and then the second load-absorbing means disposed between the support portion supporting the stopper and the first load-absorbing means can further absorb the entered load to effectively cushion a shock to be applied to the pedestrian's head etc.

For example, the first load-absorbing means may include a rod-shaped member attached to a mounting portion of the automobile body member, and a slit formed in the support bracket. In this case, the first load-absorbing means may be designed to absorb the received load while allowing the slit to be slidingly displaced along the rod-shaped member (claim 19 in the appended claims).

According to this eighteenth specific structure, when a load having the first value or more which is greater than a load to be entered during closing of the hood is entered into the support bracket due to occurrence of a situation where a pedestrian who comes into contact with the front of a stopped or slow-moving automobile falls down and runs on the hood, the support bracket formed with the slit can be guided by the rod-shaped member attached to the mounting portion of the automobile body member, and moved downward, so as to stably absorb the received load.

In the above eighteenth specific structure, preferably, the support bracket includes first moved-in prohibition means disposed between the slit and an insertion portion formed in the support bracket and penetrated by the rod-shaped member to prohibit the rod-shaped member from being moved into the slit when a load entered into the support bracket is less than the first value (claim 20 in the appended claims).

According to this nineteenth specific structure, when a load entered into the support bracket is less than the first value in the operation for closing the hood, the first moved-in prohibition means can prohibit the rod-shaped member from being moved into the slit to allow the stopper supported by the support bracket to sufficiently bring out an impact-energy absorbing function. In addition, when a load having the first value or more which is greater than a load to be entered during closing of the hood is entered into the support bracket due to occurrence of a situation where a pedestrian who comes into contact with the front of a stopped or slow-moving automobile falls down and runs on the hood, a move-in prohibited state of the rod-shaped member according to the first move-in prohibition means is released. This provides an advantage of being able to accurately move the rod-shaped member into the slit at an appropriate timing so as to effectively absorb the entered load.

In the above nineteenth specific structure, preferably, the support bracket further includes second moved-in prohibition means disposed between the support portion supporting the stopper and the insertion portion penetrated by the rod-shaped member to prohibit the rod-shaped member from being moved in a direction coming closer to the support portion when a load entered into the support bracket is less than the first value. Further, a plural number of the slits are formed in a series arrangement across the second moved-in prohibition means (claim 21 in the appended claims).

According to this twentieth specific structure, when a load having the first value or more which is greater than a load to be entered during closing of the hood is entered into the support bracket, a move-in prohibited state according to the second move-in prohibition means disposed between the support portion supporting the stopper and the insertion portion penetrated by the rod-shaped member is released to allow the rod-shaped member to be stepwise moved into the plurality of slits so as to effectively absorb the entered load. Thus, in the event of a collision, such as a collision of a pedestrian's head against the top surface of the hood, a shock to be applied to the pedestrian's head can be effectively cushioned while suppressing a peak load.

As described above, the automobile hood stopper structure of the present invention can effectively absorb an impact energy during closing of a hood, and effectively cushion an impact load acting in the event of a collision, for example, a collision of a pedestrian's head against a top surface of the hood, in a simplified structure.

Although the present invention has been fully described by way of example with reference to the accompanying drawings, it is to be understood that various changes and modifications will be apparent to those skilled in the art. Therefore, unless otherwise such changes and modifications depart from the scope of the present invention hereinafter defined, they should be construed as being included therein.

## Claims

1. An automobile hood stopper structure wherein a stopper serving as a cushioning member during closing of a hood attached to a front potion of an automobile body is disposed between said hood and an automobile body member, comprising:
a support bracket formed with a support portion supporting said stopper, and attached to said automobile body member, wherein said automobile hood stopper structure is designed such that, when said stopper supported by said support bracket is subjected to the action of a load having a given value or more which is greater than a load acting thereon during closing of said hood, said support bracket is deformed to thereby facilitate a downward movement of said stopper.

2. The automobile hood stopper structure as defined in claim 1, which is designed such that a direction of a load to be entered into said stopper during closing of said hood is approximately vertical, wherein:
said support bracket has a leg attached to said automobile body member, said leg being designed to have a greater supporting rigidity against a load entered into said stopper supported by said support bracket, in an approximately vertical direction, than against a load entered into said stopper obliquely rearward from above.

3. The automobile hood stopper structure as ,defined in claim 2, wherein said support bracket is attached to an upper shroud disposed in the front portion of the automobile body, wherein:
said leg of said support bracket includes first and second legs disposed, respectively, on the rearward and frontward sides of said support bracket across an rear end region of a top surface of said upper shroud; and
said upper shroud has a concave portion formed in the rear end region of the top surface thereof and adapted to prevent said stopper supported by said support bracket from coming into contact with said upper shroud when a load capable of moving said stopper supported by said support bracket toward the rear and lower side of said upper shroud is entered into said stopper.

4. The automobile hood stopper structure as defined in claim 3, wherein said first leg of said support bracket has a high rigidity portion for preventing said stopper supported by said support bracket from coming into contact with said first leg when a load capable of moving said stopper supported by said support bracket toward the rear and lower side of said upper shroud is entered into said-stopper.

5. The automobile hood stopper structure as defined in claim 3 or 4, wherein said support bracket includes a tilting facilitation portion for facilitating allowing each of said first of second legs to be tilted in a rearward direction of the automobile body when a load is entered into said stopper supported by said support bracket, obliquely rearward from above.

6. The automobile hood stopper structure as defined in claim 5, wherein said tilting facilitation portion consists of a rearward and upward inclined portion formed in at least one of said first and second legs of said support bracket.

7. The automobile hood stopper structure as defined in claim 6, wherein said tilting facilitation portion consisting of said rearward and upward inclined portion is formed in each of said first and second legs disposed, respectively, on the rearward and frontward sides of said support bracket, wherein:
said inclined portion formed in said first leg has a lower end located rearward relative to an action line of said approximately vertical load to be entered during closing of said hood; and
said inclined portion formed in said second leg has a lower end located frontward relative to said action line of said approximately vertical load to be entered during closing of said hood.

8. The automobile hood stopper structure as defined in claim 6 or 7, wherein said lower end of said inclined portion formed in said first leg is located frontward relative to an action line of said load capable of moving said stopper supported by said support bracket, toward the rear and lower side of said upper shroud.

9. The automobile hood stopper structure as defined in claim 1, wherein:
said support bracket has a leg located rearward relative to said support portion supporting said stopper, and attached to a mounting portion of said automobile body member, wherein:
said leg of said support bracket and said mounting portion of said automobile body member are disposed along a rearward and downward inclined plane; and
said automobile hood stopper structure is designed such that, when a load which is equal or greater than a given value acts in a direction along said inclined plane, said leg of said support bracket is moved downward along to said mounting portion of said automobile body member.

10. The automobile hood stopper structure as defined in claim 9, which includes a rod-shaped member fixed to said mounting portion of said automobile body member, wherein:
said leg of said support bracket is formed with an insertion portion penetrated by said rod-shaped member, and a slit adapted to allow said rod-shaped member to be slidingly displaced therealong when a load corresponding to said given value or greater acts in the direction along said inclined plane.

11. The automobile hood stopper structure as defined in claim 9, which includes a rod-shaped member fixed to said leg of said support bracket, wherein:
said mounting portion of said automobile body member is formed with an insertion portion penetrated by said rod-shaped member, and a slit adapted to allow said rod-shaped member to be slidingly displaced therealong when a load corresponding to said given value or greater acts in the direction along said inclined plane.

12. The automobile hood stopper structure as defined in claim 10 or claim 11, which includes moved-in prohibition means for prohibiting said rod-shaped member from being moved into said slit when a load entered into said support bracket is less than that corresponding to said given value or greater.

13. The automobile hood stopper structure as defined in claim 1, wherein said support bracket is formed with a support hole supporting said stopper in a fitting manner to serve as said support portion supporting said stopper, and provided with disengagement facilitation means for facilitating allowing said stopper fittingly engaged in said support hole to be disengaged therefrom when said stopper fittingly engaged in said support hole is subjected to the action of a load having said given value or more, said disengagement facilitation means including:
a first slit formed in said support bracket in such a manner as to be in communication with said support hole supporting said stopper; and
a rod-shaped member fixed to said automobile body member and adapted to be moved into said first slit when the load having said given value or more acts on said stopper, so as to expand a width of said first slit to expandingly deform said support hole.

14. The automobile hood stopper structure as defined in claim 13, wherein said support bracket is formed with a second slit on the opposite side of said first slit relative to said support hole in such a manner as to be in communication with said support hole.

15. The automobile hood stopper structure as defined in claim 13 or claim 14, wherein said support bracket includes moved-in prohibition means disposed between said first slit formed in said support bracket and said rod-shaped member fixed to said automobile body member to prohibit said rod-shaped member from being moved into said first slit until a load entered into said support bracket becomes equal to or greater than said given value.

16. The automobile hood stopper structure as defined in anyone of the preceding claims, wherein:
said support bracket is attached to an upper shroud disposed in the front portion of the automobile body, and designed to be deformed rearward downward depending on a load entered into said stopper obliquely rearward from above, said upper shroud having a top surface formed with an escaping space for avoiding said stopper supported by said support bracket from being pinched between said hood and said upper shroud.

17. The automobile hood stopper structure as defined in claim 16, wherein said escaping space is defined by a concave portion including a partition wall hermetically shielding between upper and lower spaces of said upper shroud.

18. The automobile hood stopper structure as defined in anyone of the preceding claims, which includes:
first load-absorbing means operable, in response to receiving a load having a first value or more which is greater than a load to be entered into said support bracket during closing of said hood, to allow the downward movement of said stopper while absorbing said received load; and
second load-absorbing means, in response to receiving a load having a second value or more which is greater than said first value, to absorb said received load in a position between said support portion supporting said stopper and said first load-absorbing means

19. The automobile hood stopper structure as defined in claim 18, wherein said first load-absorbing means includes a rod-shaped member attached to a mounting portion of said automobile body member, and a slit formed in said support bracket, said first load-absorbing means being designed to absorb said received load while allowing said slit to be slidingly displaced along said rod-shaped member.

20. The automobile hood stopper structure as defined in claim 19, wherein said support bracket includes first moved-in prohibition means disposed between said slit and an insertion portion formed in said support bracket and penetrated by said rod-shaped member to prohibit said rod-shaped member from being moved into said slit when a load entered into said support bracket is less than said first value.

21. The automobile hood stopper structure as defined in claim 20, wherein said support bracket includes second moved-in prohibition means disposed between said support portion supporting said stopper and said insertion portion penetrated by said rod-shaped member to prohibit said rod-shaped member from being moved in a direction coming closer to said support portion when a load entered into said support bracket is less than said first value, wherein a plural number of said slits are formed in a series arrangement across said second moved-in prohibition means.
